# EUROPEAN PATENT SPECIFICATION

(11) **EP 4 538 853 B1**
(45) Date of publication and mention of the grant of the patent: **04.11.2026**
(21) Application number: 23844927.6
(22) Date of filing: 25.04.2023
(51) Int. Cl.: G06F 3/16, H04M 1/60

(54) **AUDIO PLAYBACK METHOD AND ELECTRONIC DEVICE**
AUDIOWIEDERGABEVERFAHREN UND ELEKTRONISCHE VORRICHTUNG
PROCÉDÉ DE LECTURE AUDIO ET DISPOSITIF ÉLECTRONIQUE

(30) Priority: 26.07.2022 CN 202210882606
(43) Date of publication of application: 16.04.2025
(73) Proprietor: Honor Device Co., Ltd., Shenzhen, Guangdong 518040 (CN)
(72) Inventor: YANG, Xiao, Shenzhen, Guangdong 518040 (CN); WANG, Chuanguo, Shenzhen, Guangdong 518040 (CN); CHU, Jianfei, Shenzhen, Guangdong 518040 (CN)
(74) Representative: Gill Jennings & Every LLP
(86) International application number: PCT/CN2023/090506
(87) International publication number: WO 2024/021712

(56) References cited:
- CN-A- 112 929 739
- CN-A- 113 556 501
- CN-A- 114 422 935
- CN-A- 114 422 935
- CN-B- 105 741 833
- US-A1- 2019 238 980
- US-B2- 10 402 151

## Description

This application claims priority to Chinese Patent Application No. 202210882606.7, filed with the China National Intellectual Property Administration on July 26, 2022 and entitled "AUDIO PLAYBACK METHOD, AND ELECTRONIC DEVICE".

### TECHNICAL FIELD

This application relates to the field of terminal technologies, and in particular, to an audio playback method and an apparatus.

### BACKGROUND

Currently, some electronic devices each are provided with two or more speakers, to improve an audio stereo playback effect. However, for these electronic devices, a corresponding audio playback solution is not available. Especially in a call scenario, positions of different call objects displayed on a call interface of the electronic device are often different. Therefore, an audio outloud method needs to be provided based on the feature, so that in a call process, a user can perceive from auditory experience that a display position of the call object on the call interface of the electronic device corresponds to an orientation of a virtual sound image, to improve an imaging sense of a sound.
CN 114422935 A discloses an audio processing method, a terminal and a computer readable storage medium, and belongs to the technical field of spatial audio. The method comprises the following steps: receiving an application operation on a target application; presenting an application interface of the target application according to the application operation; determining the position of a virtual sound source of the to-be-output spatial audio according to the interface presentation form or the interface content of the application interface; according to the position of the virtual sound source, determining the relative orientation of the head of the user wearing the earphone relative to the virtual sound source; and adjusting the spatial audio output to the earphone according to the relative orientation, so that the spatial audio output to the earphone is perceived by the user as originating from the virtual sound source.
CN 105741833 B discloses a voice communication data processing method and device. The voice communication data processing method comprise steps of determining various communication parties participating in the voice communication, distributing the simulation orientations which are different to various communication parties, regulating at least one of voice data of various sound channels of the corresponding communication parties according to the simulation orientations, obtaining the voice data of various voice channels which has the auditory difference, and outputting the adjusted voice data of various sound channels.
US 10402151 B2 discloses a system for enhancing audio including a computer and an output device. The computer includes a sensor configured to determine a user location relative to the computer. The sensor is also configured to gather environment data corresponding to an environment of the computer. The computer also includes a processor in communication with the sensor and configured to process the user location and the environment data and adjust at least one of an audio output or a video output. The output device is in communication with the processor and is configured to output at least one of the audio output or the video output.

### SUMMARY

According to a first aspect, this application provides an audio playback method, applied to a first electronic device including a first sound emitting unit and a second sound emitting unit, and the method includes:
the first electronic device establishes call connections to a second electronic device and a third electronic device;
the first electronic device displays a first interface, where the first interface includes a first image, a second image, and a third image, the first image, the second image, and the third image are located at different positions of the first interface, the first image is associated with a first user, the first user talks through the first electronic device, the second image is associated with a second user, the second user talks through the second electronic device, the third image is associated with a third user, the third user talks through the third electronic device, and the first sound emitting unit and the second sound emitting unit are in an enabled state;
the first electronic device receives an audio signal sent by the second electronic device or the third electronic device;
the first sound emitting unit of the first electronic device outputs a first sound signal, where the first sound signal is obtained by processing the audio signal sent by the second electronic device or the third electronic device; and
the second sound emitting unit of the first electronic device outputs a second sound signal, where the second sound signal is obtained by processing the audio signal sent by the second electronic device or the third electronic device, and
when the second user speaks, intensity of the first sound signal is greater than intensity of the second sound signal.

In an implementation, when the third user speaks, intensity of the second sound signal is greater than intensity of the first sound signal.

In the foregoing implementation, during a call between a plurality of users, a position of the second image associated with the second user on the interface of the first electronic device and a position of the third image associated with the third user on the interface of the first electronic device are different. When the second user speaks and the third user speaks, based on the positions of the second user and the third user, the first electronic device may drive and adjust intensity of the sound signals emitted by the different sound emitting units, so that a virtual sound image corresponds to a position of a user. This improves an imaging sense of the sound.

In an implementation, the first space and the second space have at least a non-overlapping part.

When the second user speaks, the first sound signal and the second sound signal have opposite phases in first space. In the foregoing embodiment, when the third user speaks, the first sound signal and the second sound signal have opposite phases in second space.

Further, when users in different positions are controlled to emit sounds, phase-inverted sound signals are generated in different space in which the sound propagates, so that sound cancellation in different space may be implemented. This implements an effect that a sound in some sound propagation space is relatively small and a sound in some sound propagation space is relatively large. This further improves the correspondence between the virtual sound image and the position of the user.

In an implementation, when the second user or the third user speaks, the first interface includes a first marker, where the first marker indicates that the second user or the third user is emitting a sound.

In an implementation, the image may be a static image or a dynamic image.

In the foregoing embodiment, when the image is a static image, the image is a profile image of a user associated with the image; or when the image is a dynamic image, the image is an image collected by an electronic device used by a user associated with the image.

In an implementation, the first interface further includes a microphone control, a speaker control, a camera control, and a hang-up control.

In the foregoing embodiment, the speaker control is in an enabled state.

According to a second aspect, this application provides an audio playback method, applied to a first electronic device including a first sound emitting unit and a second sound emitting unit, and the method includes:
the first electronic device displays a first interface after the first electronic device establishes a call connection to a second electronic device, where the first interface includes a first image and a second image, the first image is associated with a first user, the first user talks through the first electronic device, the second image is associated with a second user, the second user talks through the second electronic device, the second image is a dynamic image, the second image covers a screen of the first electronic device, the second image includes an image of the second user, and the first sound emitting unit and the second sound emitting unit are in an enabled state;
the first electronic device receives an audio signal sent by the second electronic device;
the first sound emitting unit of the first electronic device outputs a first sound signal, where the first sound signal is obtained by processing the audio signal sent by the second electronic device; and
the second sound emitting unit of the first electronic device outputs a second sound signal, where the second sound signal is obtained by processing the audio signal sent by the second electronic device, and
when the image of the second user in the second image is located at a first position on the screen of the first electronic device, intensity of the first sound signal is greater than intensity of the second sound signal.

When the image of the second user in the second image is located at a second position on the screen of the first electronic device, intensity of the second sound signal is greater than intensity of the first sound signal.

When the image of the second user in the second image is located at the first position on the screen of the first electronic device, the first sound signal and the second sound signal have opposite phases in first space, or
when the image of the second user in the second image is located at the second position on the screen of the first electronic device, the first sound signal and the second sound signal have opposite phases in second space.

In the foregoing embodiment, the first space and the second space have at least a non-overlapping part.

In an implementation, the first interface further includes a camera switching control, a switching-to-voice control, a background blurring control, and a hang-up control.

With reference to the first aspect and the second aspect, in an implementation, the first electronic device processes the audio signal sent by the second electronic device or the third electronic device, to generate a first outloud audio signal and a second outloud audio signal, where
the first outloud audio signal is processed and then transmitted to the first sound emitting unit, to drive the first sound emitting unit to output the first sound signal; and
the second outloud audio signal is processed and then transmitted to the second sound emitting unit, to drive the second sound emitting unit to output the second sound signal.

In an implementation, that the first electronic device processes the audio signal sent by the second electronic device or the third electronic device, to generate a first outloud audio signal and a second outloud audio signal includes:
the first electronic device performs channel extension processing on the audio signal sent by the second electronic device or the third electronic device, to generate a first audio signal and a second audio signal, where
the audio signal sent by the second electronic device or the third electronic device is a single-channel audio signal.

The first electronic device performs signal parameter processing on the first audio signal to obtain the first outloud audio signal; and the first electronic device performs signal parameter processing on the second audio signal to obtain the second outloud audio signal.

In an implementation, during the signal parameter processing performed on the first audio signal and the second audio signal, phase adjustment processing is performed on at least one audio signal, and gain adjustment processing is performed on at least one audio signal.

In the foregoing embodiment, phase adjustment processing includes phase inversion processing.

In the foregoing embodiment, the signal parameter processing performed on the first audio signal and the second audio signal includes signal advancing processing or signal delaying processing.

It can be ensured through the foregoing signal parameter processing that in the electronic device including a plurality of sound emitting units, sound signals emitted by at least two sound emitting units have opposite phases in some sound propagation space and different sound intensity.

In an implementation, when the second user speaks, signal strength of the first outloud audio signal is greater than signal strength of the second outloud audio signal.

In an implementation, when the image of the second user is located at the first position on the screen of the first electronic device and the second user speaks, signal strength of the first outloud audio signal is greater than signal strength of the second outloud audio signal.

In the foregoing embodiment, that the first electronic device processes the audio signal sent by the second electronic device or the third electronic device, to generate a first outloud audio signal and a second outloud audio signal includes:
filtering processing is performed on the audio signal sent by the second electronic device or the third electronic device.

In the foregoing embodiment, that the first electronic device processes the audio signal sent by the second electronic device or the third electronic device, to generate a first outloud audio signal and a second outloud audio signal includes:
filtering processing is performed on at least one of the first audio signal or the second audio signal.

A filtered frequency may be set according to an actual requirement. For example, the frequency of the filtered audio signal may be set based on a frequency range of a human voice, and the frequency of the filtered audio signal may be set to be within a range of 20 Hz to 20 kHz. Preferably, the frequency of the filtered audio signal may be set within a range of 300 Hz to 3 kHz.

A to-be-processed audio signal may be controlled to be within a range through filtering processing. This reduces complexity of processing the audio signal by the electronic device, to improve processing efficiency of the electronic device.

In an implementation, the first sound emitting unit or the second sound emitting unit may include one or more speakers and/or screen sound emitting units.

In an implementation, the first sound emitting unit includes a first speaker, and the second sound emitting unit includes a first screen sound emitting unit or a second speaker.

In an implementation, the first sound emitting unit includes a first screen sound emitting unit, and the second sound emitting unit includes a first speaker or a second screen sound emitting unit.

According to a third aspect, this application provides an electronic device, where the electronic device includes one or more processors and a memory; and the memory is coupled to the one or more processors, the memory is configured to store computer program code, the computer program code includes computer instructions, and the one or more processors invoke the computer instructions to cause the electronic device to perform the method according to any one of the first aspect and the second aspect.

According to a fourth aspect, this application provides a chip system, where the chip system is applied to an electronic device, the chip system includes one or more processors, and the processor is configured to invoke computer instructions to cause the electronic device to perform the method according to any one of the first aspect and the second aspect.

According to a fifth aspect, this application provides a computer program product including instructions. When the computer program product is run on an electronic device, the electronic device is enabled to perform the method according to any one of the first aspect and the second aspect.

According to a sixth aspect, this application provides a computer-readable storage medium including instructions. When the instructions are run on an electronic device, the electronic device is enabled to perform the method according to any one of the first aspect and the second aspect.

### BRIEF DESCRIPTION OF DRAWINGS

FIG. 1 is a diagram of a hardware structure of an electronic device according to an embodiment of this application;
FIG. 2 is a front view and a sectional view of an electronic device including three speakers according to an embodiment of this application;
FIG. 3 is a schematic diagram of an electronic device including four speakers according to an embodiment of this application;
FIG. 4 is a schematic diagram of a process of processing an audio signal according to an embodiment of this application;
FIG. 5A to FIG. 5E are a schematic diagram of an interface of a call application during a call among three users according to an embodiment of this application;
FIG. 6 is a schematic diagram of an interface of a call application during a call among four users according to an embodiment of this application;
FIG. 7A to FIG. 7D are a schematic diagram of an interface of a call application during a video call between two users according to an embodiment of this application;
FIG. 8 is a schematic diagram of a specific process in which an electronic device performs signal processing on an audio signal according to an embodiment of this application;
FIG. 9 is a schematic diagram of implementing virtual sound image orientation control based on a crosstalk cancellation principle according to an embodiment of this application;
FIG. 10 is a schematic flowchart of implementing, based on coordinates of a sound emitting object of another party relative to a screen of an electronic device, a target sound outloud solution according to an embodiment of this application;
FIG. 11 is a schematic flowchart of transmitting coordinate information to an algorithm by an electronic device according to an embodiment of this application;
FIG. 12A to FIG. 12D are a schematic diagram of obtaining coordinates of a sound emitting object of another party in a manner in which a screen is divided into areas according to an embodiment of this application;
FIG. 13 is a schematic diagram of obtaining coordinates of a sound emitting object of another party through video, image, and voice analyzing according to an embodiment of this application; and
FIG. 14 is a schematic diagram of determining a sound emitting solution based on a distance between a sound emitting object of another party and a sound emitting unit according to an embodiment of this application.

### DESCRIPTION OF EMBODIMENTS

Terms used in the following embodiments of this application are merely intended to describe specific embodiments, but are not intended to limit this application. Terms "one", "a", "the", "the foregoing", "this", and "the one" of singular forms used in this specification and the appended claims of this application are also intended to include plural forms, unless otherwise specified in the context clearly. It should be further understood that the term "and/or" used in this application indicates and includes any or all possible combinations of one or more listed items.

The following terms "first" and "second" are merely used for description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

A term "user interface (user interface, UI)" in the following embodiments of this application is a medium interface for interaction and information exchange between an application or operating system and a user, and implements the conversion between an internal form of information and a form that can be accepted by the user. The user interface is source code written in a specific computer language such as java and the extensible markup language (extensible markup language, XML). The interface source code is parsed and rendered on an electronic device, and is finally presented as content that can be recognized by the user. The user interface is usually represented in a form of a graphical user interface (graphical user interface, GUI), and is a user interface that is related to a computer operation and that is displayed in a graphic manner. The user interface may be a visual interface element such as a text, an icon, a button, a menu, a tab, a text box, a dialog box, a status bar, a navigation bar, or a Widget that is displayed on a display of the electronic device.

For ease of understanding, related terms and concepts in embodiments of this application are first described below.

### (1) Call algorithm

The call algorithm includes an algorithm related in a downlink call and an algorithm related in an uplink call.

The downlink call means an audio signal obtained by processing an input audio signal by an electronic device after the electronic device receives the input audio signal sent to the local device by another electronic device, and can be played through a sound emitting device.

The uplink call means that the electronic device collects a sound signal by using a microphone, processes the sound signal to generate an output audio signal, and then sends the output audio signal to another electronic device.

During the uplink call, the electronic device processes the input audio signal transmitted by the another electronic device to the local device through a base station. The processing includes: The input audio signal is first decoded by using a modem into an audio signal that can be recognized by the electronic device, then passes through a downlink call processing module, and then is decoded into an analog audio signal by using a codec. Then, power amplification is performed by using a power amplifier, and then a sound emitting device is driven to play the signal. Algorithms involved in the downlink call processing module may include noise reduction, timbre adjustment, and volume adjustment.

During the uplink call, a microphone of the electronic device collects the sound signal, and processes the sound signal. The processing includes: The sound signal is first encoded by using the codec to obtain a digital audio signal, then passes through an uplink call processing module, and then is modulated by using the modem to obtain an output audio signal that can be recognized by the base station. Algorithms involved in the uplink call processing module may include noise reduction, timbre adjustment, and volume adjustment.

The noise reduction, the timbre adjustment, and the volume adjustment involved in the downlink call processing module and the uplink call processing module are the same.

The noise reduction is used for reducing the noise in one audio signal, and suppressing a noise signal and a reverberation signal in the audio signal.

The timbre adjustment is used for adjusting a magnitude of energy of the audio signal of different frequency bands in the audio signal to improve the voice timbre. The unit of energy is decibel (decibel, dB), which is used for describing strength of the sound signal. An audio signal having higher energy sounds louder when played with a same sound emitting device.

It may be understood that timbre is energy proportions of audio signals in different frequency bands in the audio signal.

The volume adjustment is used for adjusting energy of the audio signal.

### (2) Virtual sound image

The virtual sound image is also referred to as a virtual sound source or a perceived sound source, or is referred to as a sound image for short. When a sound is played out loud, a listener can perceive a spatial position of a sound source from auditory experience to form a sound picture, and the sound picture is referred to as a virtual sound image. The sound image is an imaging sense of a sound field in a human brain. For example, a person closes eyes in a sound field and imagines a status of a sound source, for example, a sound direction, size, distance, and the like, from an auditory experience.

### (3) Call application

A call application (APP, Application) is an application that can execute a call function, where the executed call function may be a voice call function or a video call function, and the call application may be a call application provided by the electronic device or a call application provided by a third party, for example, MeeTime, WeChat, DingTalk, QQ, Tencent Meeting, and the like.

Currently, most electronic devices each are provided with two or more speakers, to improve an audio stereo playback effect. However, for these electronic devices, a corresponding audio playback solution is not available, which results in a poor imaging sense.

To resolve the foregoing problem, this embodiment provides an audio playback solution, and in particular, provides an audio playback solution of an electronic device applied when the electronic device receives downlink call audio data in a call scenario. In this solution, coordinates of a sound emitting object of another party relative to a screen of the electronic device may be used as one input of a call algorithm module, so that the downlink call audio data is processed by the call algorithm module to generate outloud audio data, and the outloud audio data is transmitted to a corresponding sound emitting unit after processing such as encoding, decoding, and power amplification, to drive the sound emitting unit to emit a sound. An orientation of a virtual sound image generated by an overall sound emitting effect of the sound emitting unit corresponds to the coordinates of the sound emitting object of the another party relative to the screen of the electronic device. This improves an imaging sense of the sound, and improves call experience of the user when the sound is played out loud.

The following first describes an electronic device used in a sound outloud solution in a call process according to an embodiment of this application with reference to the accompanying drawings.

For example, the electronic device in this embodiment of this application may be devices having a voice communication function, such as a mobile phone, a tablet computer, an ultra-mobile personal computer (ultra-mobile personal computer, UMPC), a netbook, a cellular phone, a personal digital assistant (personal digital assistant, PDA), or a wearable device (for example, a smart watch or a smart band). A specific form of the electronic device is not particularly limited in this embodiment of this application.

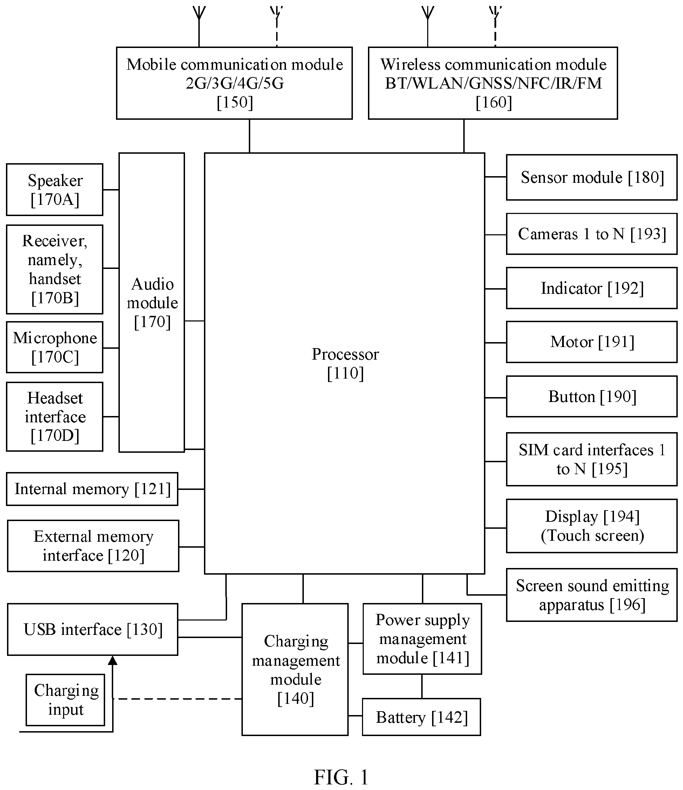

For example, the electronic device is a mobile phone. FIG. 1 shows a schematic diagram of a structure of an electronic device according to an embodiment of this application. In other words, for example, the electronic device shown in FIG. 1 may be a mobile phone.

As shown in FIG. 1, the mobile phone may include a processor 110, an external memory interface 120, an internal memory 121, a universal serial bus (universal serial bus, USB) interface 130, a charging management module 140, a power supply management module 141, a battery 142, an antenna 1, an antenna 2, a mobile communication module 150, a wireless communication module 160, an audio module 170, a speaker 170A, a receiver (namely, a handset) 170B, a microphone 170C, a headset interface 170D, a sensor module 180, a button 190, a motor 191, an indicator 192, a camera 193, a display 194, a subscriber identification module (subscriber identification module, SIM) card interface 195, a screen sound emitting apparatus 196, and the like.

It may be understood that the structure illustrated in this embodiment does not constitute a specific limitation on the mobile phone. In some other embodiments, the mobile phone may include more or fewer components than those shown in the figure, some components may be combined, some components may be split, or the components are arranged in different manners. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a neural center and command center of the mobile phone. The controller may generate an operation control signal based on instruction operation code and a timing signal, to complete control of instruction fetching and instruction execution.

A memory may be further disposed in the processor 110, and is configured to store instructions and data. In some embodiments, the memory in the processor 110 is a cache memory. The memory may store instructions or data recently used or cyclically used by the processor 110. If the processor 110 needs to use the instructions or data again, the instructions or data may be directly invoked from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment is merely an example for description and does not constitute a limitation on the structure of the mobile phone. In some other embodiments, the mobile phone may alternatively use an interface connection manner different from that in the foregoing embodiment, or use a combination of a plurality of interface connection manners.

A wireless communication function of the mobile phone can be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the mobile phone may be configured to cover a single or a plurality of communication bands. Different antennas may be multiplexed to increase antenna utilization. For example, the antenna 1 may be multiplexed as a diversity antenna in a wireless local area network. In some other embodiments, the antenna may be used in combination with a tuning switch.

In some embodiments, the antenna 1 and the mobile communication module 150 in the mobile phone are coupled, and the antenna 2 and the wireless communication module 160 in the mobile phone are coupled, so that the mobile phone can communicate with a network and another device by using a wireless communication technology. The foregoing mobile communication module 150 may provide a solution, applied to the mobile phone, to wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation.

The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the mobile phone and that includes a wireless local area network (wireless local area networks, WLAN) (for example, a wireless fidelity (wireless fidelity, Wi-Fi) network), a Bluetooth (Bluetooth, BT), a global navigation satellite system (global navigation satellite system, GNSS), frequency modulation (frequency modulation, FM), a near field communication (near field communication, NFC), and an infrared (infrared, IR) technology, and the like.

The wireless communication module 160 may be one or more components integrating at least one communication processing module. The wireless communication module 160 receives an electromagnetic wave through the antenna 2, performs frequency modulation and filtering processing on an electromagnetic wave signal, and sends the processed signal to the processor 110. The wireless communication module 160 may further receive a to-be-sent signal from the processor 110, perform frequency modulation and amplification on the signal, and convert the signal into an electromagnetic wave for radiation through the antenna 2.

Certainly, the wireless communication module 160 may also support the mobile phone in performing voice communication. For example, the mobile phone may access a Wi-Fi network by using the wireless communication module 160, and then interact with another device by using any application that can provide a voice communication service, to provide a user with the voice communication service. For example, the foregoing application that may provide the voice communication service may be an instant messaging application.

The mobile phone may implement a display function through the GPU, the display 194, the application processor, and the like. The GPU is a microprocessor for image processing, and is connected to the display 194 and the application processor. The GPU is configured to perform mathematical and geometric calculation for graphics rendering. The processor 110 may include one or more GPUs, and the one or more GPUs execute program instructions to generate or change displayed information. The display 194 is configured to display an image, a video, and the like.

The mobile phone can implement a photographing function by using the ISP, the camera 193, the video codec, the GPU, the display 194, the application processor, and the like. The ISP is configured to process data fed back by the camera 193. In some embodiments, the ISP may be disposed in the camera 193. The camera 193 is configured to capture a static image or a video. In some embodiments, the mobile phone may include one or N cameras 193, where N is a positive integer greater than 1.

The mobile phone may implement an audio function by using the audio module 170, the speaker 170A, the receiver (namely, the handset) 170B, the microphone 170C, the headset interface 170D, the application processor, and the like. For example, the audio functions are music playing and recording.

The audio module 170 is configured to convert a digital audio signal into an analog audio signal for output, and also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "horn", is configured to convert an audio electrical signal into a sound signal.

The receiver 170B, also referred to as the "handset", is configured to convert an audio electrical signal into a sound signal. The microphone 170C, also referred to as a "mic" or "mike", is configured to convert a sound signal into an electrical signal. The headset interface 170D is configured to connect to a wired headset. The headset interface 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

For example, in this embodiment of this application, the audio module 170 may convert audio electrical signals received by the mobile communication module 150 and the wireless communication module 160 into sound signals. The speaker 170A or receiver 170B (namely, the "handset") of the audio module 170 plays the sound signal, and the screen sound emitting apparatus 196 drives the screen (namely, the display) to perform screen sound emitting to play the sound signal. There may be one or more speakers 170A and screen sound emitting apparatus 196.

Certainly, it may be understood that FIG. 1 is merely an example for description when a device form of the electronic device is a mobile phone. If the electronic device is in another device form, for example, a tablet computer, a handheld computer, a PDA, or a wearable device (for example, a smart watch or a smart band), the structure of the electronic device may include fewer structures than those shown in FIG. 1 or may include more structures than those shown in FIG. 1. This is not limited herein.

In embodiments of this application, the electronic device includes a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a main memory). An operating system at the operating system layer may be any one or more types of computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

With reference to the accompanying drawings, the following describes embodiments of this application by using a plurality of exemplary embodiments. Methods in the following embodiments may be implemented in an electronic device having the foregoing hardware structure.

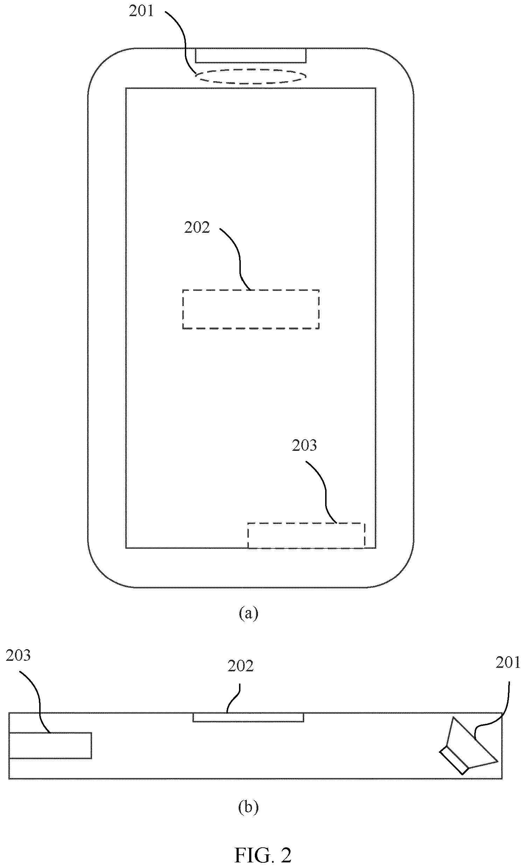

(a) in FIG. 2 is a schematic diagram of a front (a screen of an electronic device faces a user) of an electronic device having three sound emitting units. The electronic device includes a top speaker 201, a middle screen sound emitting device 202, and a bottom speaker 203. (b) in FIG. 2 is a schematic diagram of a profile of the electronic device. As shown in the figure, the screen sound emitting device is disposed below the screen to drive the screen to vibrate to emit a sound. In this embodiment of this application, the screen sound emitting device may use a commonly used component that can generate controllable vibration, for example, a piezoelectric ceramic actuator and a voice coil actuator. To obtain a relatively large amplitude, a driver may be at a position that is below the screen and that is at a center of the screen or a position that is below the screen and that is near the center of the screen.

For example, the screen sound emitting device may be a long strip structure with a relatively large aspect ratio, and a long side of the screen sound emitting device may be disposed in an orientation perpendicular to or parallel to a long side of the screen of the electronic device, or may be disposed in another orientation or manner. A placement angle of the screen sound emitting device is not specifically limited in this embodiment.

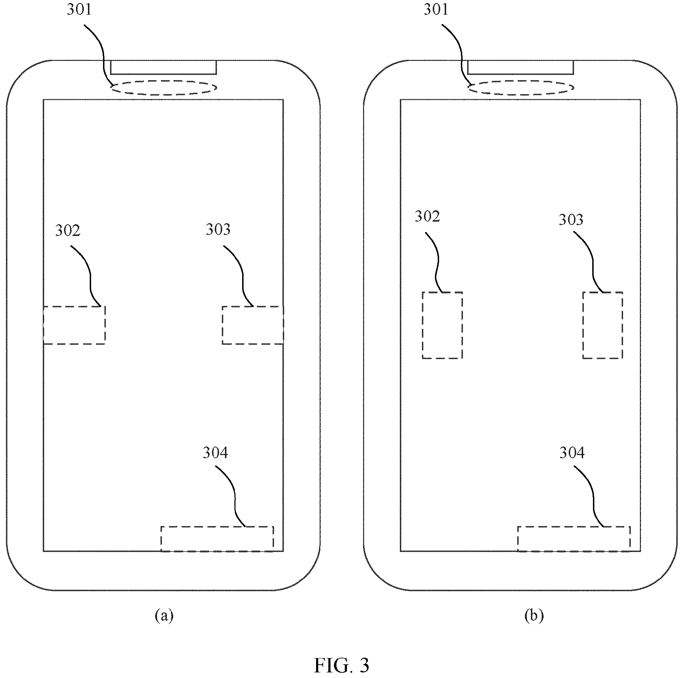

In some other embodiments, as shown in (a) and (b) in FIG. 3, an electronic device may include four sound emitting units, namely, a top speaker 301, a left screen sound emitting device 302, a right screen sound emitting device 303, and a bottom speaker 304. The left screen sound emitting device 302 and the right screen sound emitting device 303 are disposed below a screen to drive the screen to emit a sound, the left screen sound emitting device 302 may be disposed in a middle left area below the screen of the electronic device, and the right screen sound emitting device 303 may be disposed in a middle right area below the screen of the electronic device. Long sides of the left screen sound emitting device 302 and the right screen sound emitting device 303 may be disposed perpendicular to a long side of the screen, or may be disposed parallel to the long side of the screen.

In some other embodiments, the electronic device may include only two sound emitting units (not shown in the figure), and both of the two sound emitting units may be speakers, for example, one top speaker and one bottom speaker. Alternatively, the electronic device may include one speaker and one screen sound emitting device, for example, one top speaker and one middle screen sound emitting device. Alternatively, the electronic device may include two screen sound emitting devices, for example, one left screen sound emitting device and one right screen sound emitting device.

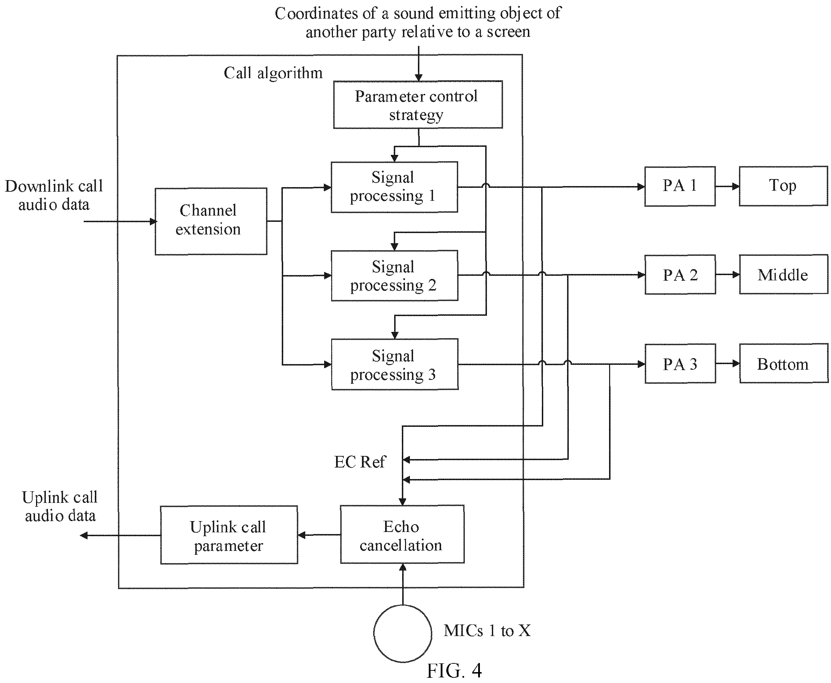

FIG. 4 shows a process of processing audio data in a call scenario. For example, during a call of the electronic device, the electronic device may receive a call audio signal sent by another electronic device, and the call audio signal is processed to generate downlink call audio data. In addition, the microphone of the electronic device may collect a sound signal, and the sound signal is processed to generate uplink call audio data. The downlink call audio data may be processed by the call algorithm module in the electronic device. In the call algorithm module, channel extension processing may be performed on the downlink call audio data. The channel extension processing extends downlink single channel call audio data into a multi-channel call audio signal, and a channel extension quantity is set based on a quantity of sound emitting units included in the electronic device. The foregoing channel extension is performed, so that a multi-channel sound emitting effect can be implemented.

The electronic device including the three sound emitting units shown in FIG. 2 is used as an example. The downlink call audio data is extended into a three-channel audio signal. Audio signals obtained through channel expansion are respectively an audio signal 1, an audio signal 2, and an audio signal 3. The call algorithm module independently and concurrently processes the audio signal 1, the audio signal 2, and the audio signal 3 to generate an outloud audio signal 1, an outloud audio signal 2, and an outloud audio signal 3.

For example, the foregoing processing on each audio signal includes processing such as equalization (EQ, Equaliser) and dynamic range control (DRC, Dynamic Range Control).

Each outloud audio signal processed by the call algorithm module is output on two paths. On one path, the outloud audio signal is output to a corresponding sound emitting unit after processing such as power amplification (PA, Power Amplifier). For example, the outloud audio signal 1 is output to the top speaker 201 after processing such as PA 1, the outloud audio signal 2 is output to the middle screen sound emitting device 202 after processing such as PA 2, and the outloud audio signal 3 is output to the bottom speaker 203 after processing such as PA 3. On the other path, the outloud audio signal is output to an echo cancellation submodule in the call algorithm module after EC Ref (Echo Reference) processing. The echo cancellation submodule may cancel an outloud sound collected by the microphone of the electronic device, to prevent another electronic device from receiving the sound collected by the microphone of the electronic device.

In this embodiment, in the call process, the coordinates of the sound emitting object of the another party relative to the screen of the electronic device are used as one input in the call algorithm module, so that a sound emitting effect of a sound emitting unit is controlled, to improve auditory experience of the user during a call. In the call process, the sound emitting object of the another party may be displayed in different manners on the screen of the electronic device. For example, during a voice call, the sound emitting object of the another party may be a user profile picture displayed on the screen of the local electronic device. During a video call, the sound emitting object of the another party may be a person displayed in a video picture of the another party on the local electronic device.

As shown in FIG. 4, the call algorithm module of the electronic device receives the coordinates of the sound emitting object of the another party relative to the screen of the electronic device, generates a parameter control strategy, and performs corresponding processing on an audio signal of each channel, so that some sound emitting units in the sound emitting units are primary sound emitting units, and some sound emitting units are secondary sound emitting units. For example, the electronic device including the three sound emitting units in FIG. 2 is still used as an example. The top speaker may be used as the primary sound emitting unit, and at least one sound emitting unit of the middle screen sound emitting device and the bottom speaker may be used as the secondary sound emitting unit. The primary sound emitting unit and the secondary sound emitting unit work together, so that, in an overall sound emitting effect, an orientation of a virtual sound image corresponds to a position of the sound emitting object of another party. This improves an imaging sense of the sound.

The following describes sound outloud policies of the electronic device in different call scenarios in this embodiment.

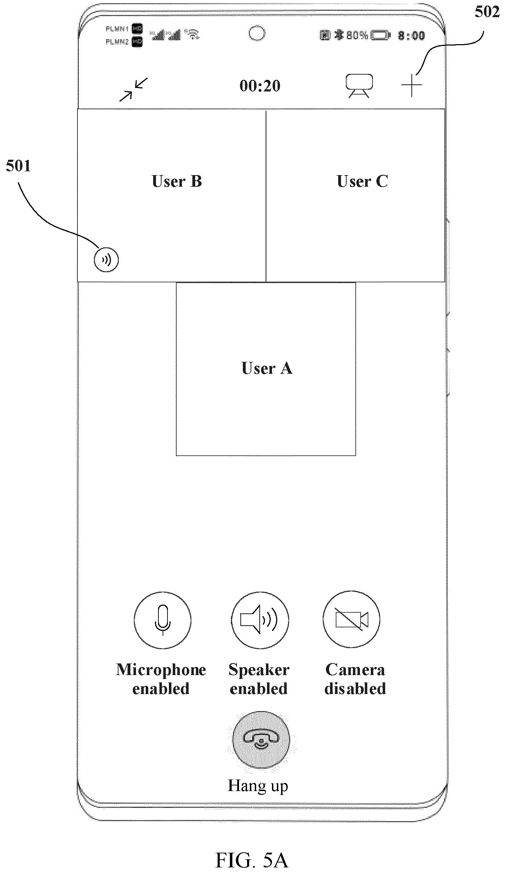

For example, FIG. 5A to FIG. 5E show a user interface of a call application during a call among three users. The interface shown in FIG. 5A is a call application interface displayed on an electronic device of a user A when the electronic device of the user A establishes a call connection to an electronic device of a user B and an electronic device of a user C. The user interface includes three user images, an image of the user B is located in the upper left of a screen of the electronic device, an image of the user C is located in the upper right of the screen of the electronic device, and an image of the user A is located at a middle position of the screen and is located below the image of the user B and the image of the user C. The user image may be a static image, for example, the user image may be a profile picture of each user.

The interface shown in FIG. 5A further includes a microphone control, a speaker control, a camera control, and a hang-up control. When the electronic device establishes a voice call connection, the microphone control and the speaker control on the interface are in an enabled state by default, and the camera control is in a disabled state by default. Opening or closing of a plurality of sound emitting units of the electronic device may be simultaneously controlled through an operation of clicking the speaker control. For example, as shown in the interface in FIG. 5A, the sound emitting unit is in the enabled state, and the electronic device of the user A may receive a sound signal sent by the electronic device of the user B or the electronic device of the user C, and play the sound out loud by using the sound emitting unit.

The interface shown in FIG. 5A further includes a first marker 501. The first marker 501 indicates the user that is emitting a sound, and the first marker 501 may be a marker that is located in a user image area and that has a shape similar to a speaker or a horn, or the first marker may be a highlighted border set around the user image.

On the interface shown in FIG. 5A, when the user B is emitting a sound, and the electronic device of the user A receives a call audio signal sent by the electronic device of the user B, the first marker 501 appears in an image area of the user B, to indicate that the user B is emitting the sound. In this case, if the electronic device of the user A is the structure including the three sound emitting units shown in FIG. 2, in a target sound outloud solution, the top speaker 201 may be used as the primary sound emitting unit, and the middle screen speaker 202 or the bottom speaker 203 may be used as the secondary sound emitting unit, so that an orientation of a virtual sound image corresponds to a position of the image of the user B in the upper left of the screen of the electronic device. In this way, the user A perceives from auditory experience that a sound of the user B is emitted from an upper spatial area of the electronic device of the user A. If the electronic device of the user A is the structure including the four sound emitting units shown in FIG. 3, in a target sound outloud solution, the top speaker 301 and the left screen sound emitting device 302 may be used as the primary sound emitting units, and the right screen sound emitting device 303 or the bottom speaker 304 may be used as the secondary sound emitting unit, so that the user A perceives from auditory experience that a sound of the user B is emitted from an upper left spatial area of the electronic device of the user A.

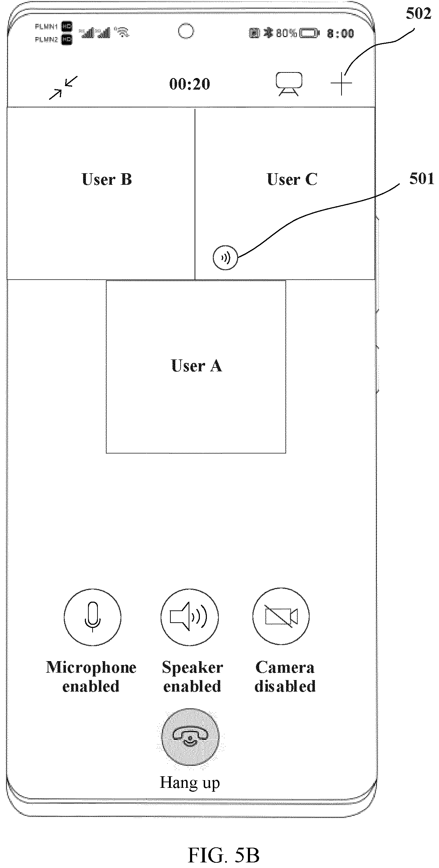

When the user C is emitting a sound, a call user interface displayed on the electronic device of the user A is shown in FIG. 5B. In this case, an image area of the user C includes the first marker 501. When the electronic device of the user A receives a call audio signal sent by the electronic device of the user C, if the electronic device of the user A is the structure of the three sound emitting units shown in FIG. 2, a target sound outloud solution of the electronic device of the user A is the same as the sound outloud solution that corresponds to the three sound emitting units in the interface shown in FIG. 5A. If the electronic device of the user A is the structure including the four sound emitting units shown in FIG. 3, the target sound outloud solution may be: The top speaker 301 and the right screen sound emitting device 303 are used as the primary sound emitting units, and the left screen sound emitting device 302 or the bottom speaker 304 is used as the secondary sound emitting unit. In this way, the user A perceives from auditory experience that a sound of the user C is emitted from an upper right spatial area of the electronic device of the user A.

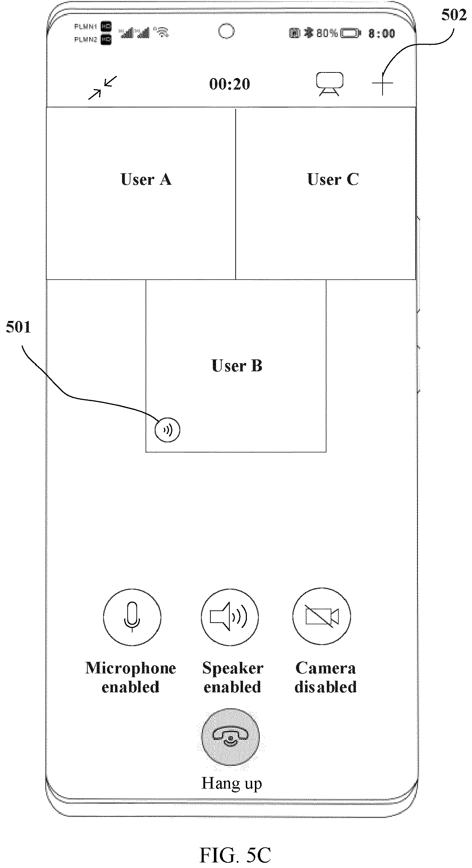

FIG. 5C shows another interface of the call application displayed on the electronic device of the user A during a call among three users. The interface shown in FIG. 5C is different from the interface shown in FIG. 5A in that, positions of the image of the user B and the image of the user A change, the image of the user A is located in the upper left of the screen, and the image of the user B is located in the middle of the screen and is located below the image of the user A and the image of the user C. As shown in FIG. 5C, when the electronic device of the user A receives the call audio signal sent by the electronic device of the user B, in this case, if the electronic device of the user A is the structure including the three sound emitting units shown in FIG. 2, in a target sound outloud solution, the middle screen sound emitting device 202 may be used as the primary sound emitting unit, and the top speaker 201 or the bottom speaker 203 may be used as the secondary sound emitting unit, so that an orientation of the virtual sound image corresponds to a position of the image of the user B in the middle of the screen of the electronic device of the user A. In this way, the user A perceives from auditory experience that the sound of the user B is emitted from a middle spatial area of the electronic device of the user A. If the electronic device of the user A is the structure including the four sound emitting units shown in FIG. 3, in a target sound outloud solution, the left screen sound emitting device 302 and the right screen sound emitting device 303 may be used as the primary sound emitting units, and the top speaker 301 or the bottom speaker 304 may be used as the secondary sound emitting unit, so that the user A perceives from auditory experience that the sound of the user B is emitted from a middle spatial area of the electronic device of the user A.

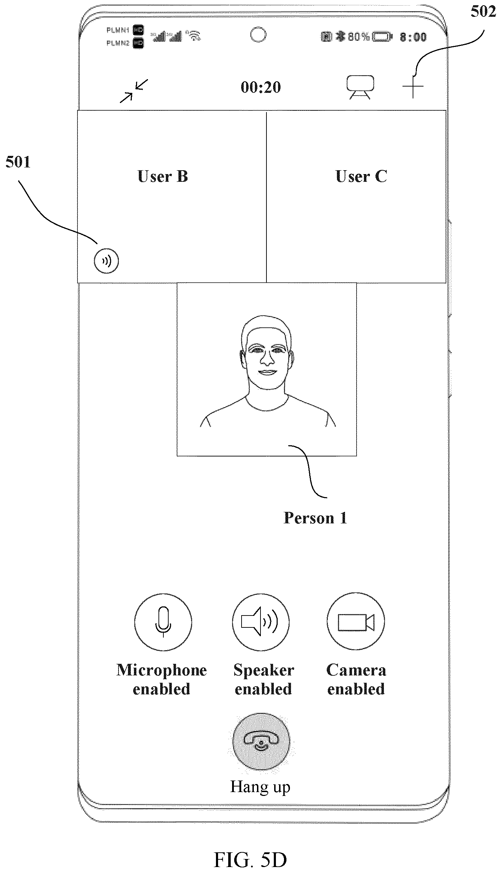

When the camera control on the interface shown in FIG. 5A is touched, the electronic device of the user A displays, in response to the touch operation, an interface shown in FIG. 5D. On the interface shown in FIG. 5D, the camera control is in the enabled state, and in response to the touch operation, the electronic device of the user A enables the camera, and the image of the user A may be a dynamic image obtained by the camera of the electronic device of the user A. As shown in FIG. 5D, the image of the user A includes an image of a person 1.

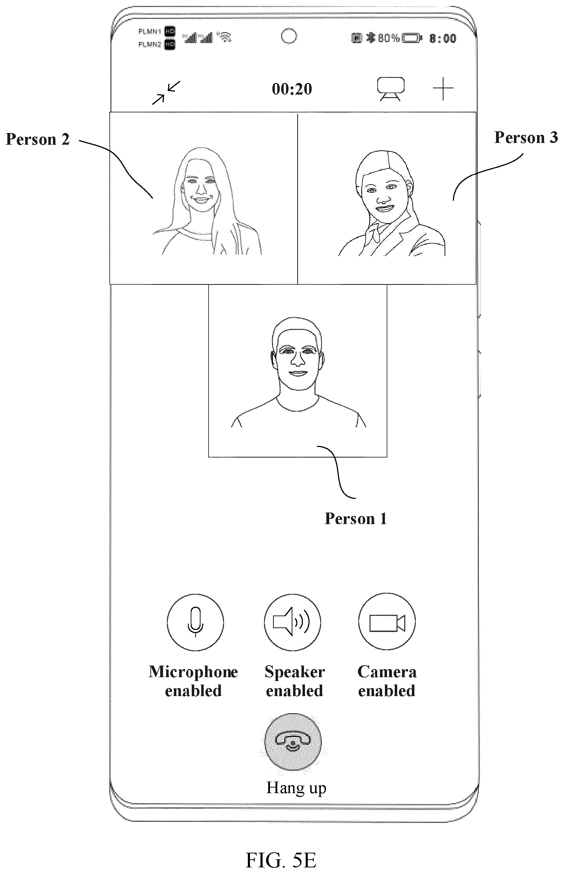

After the electronic device of the user B and the electronic device of the user C enable cameras in the call process, the image of the user B and the image of user C may also display dynamic images, on the electronic device of the user A. On an interface shown in FIG. 5E, the image of the user B is a dynamic image obtained by the electronic device of the user B, the dynamic image includes an image of a person 2, the image of the user C is a dynamic image obtained by the electronic device of the user C, and the dynamic image includes an image of a person 3.

The interface shown in FIG. 5A further includes an adding control 502. The adding control 502 may perform a function of adding one or more other users to join a call. For example, based on the call shown in FIG. 5A, a user D may be added to the call.

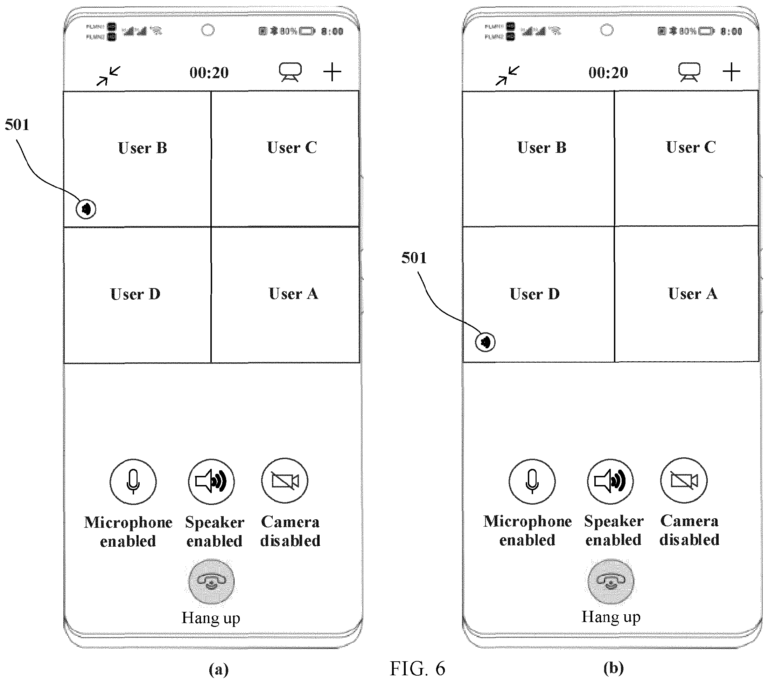

For example, FIG. 6 shows a call application interface displayed on an electronic device of a user A during a voice call among four users. The interface includes four user images. An image of a user B is located in the upper left of a screen of the electronic device of the user A, an image of a user C is located in the upper right of the screen of the electronic device of the user A, an image of a user D is located in a middle left area of the screen of the electronic device of the user A, and an image of the user A is located in a middle right area of the screen of the electronic device of the user A.

On an interface shown in (a) in FIG. 6, when the user B is emitting a sound, the electronic device of the user A receives a call audio signal sent by the electronic device of the user B, and the image area of the user B includes a first marker 501. In a call scenario of the interface shown in (a) in FIG. 6, a target sound outloud solution for the electronic device of the user A including the three sound emitting units in FIG. 2 is the same as the sound outloud solution that corresponds to the three sound emitting units in the call scenario of the interface shown in FIG. 5A. A target sound outloud solution for the electronic device of the user A including the four sound emitting units in FIG. 3 is the same as the sound outloud solution that corresponds to the four sound emitting units in the call scenario of the interface shown in FIG. 5A.

(b) in FIG. 6 shows another user interface of a call among four users. The interface shown in (b) in FIG. 6 is different from the interface shown in (a) in FIG. 6 in that a position of the user image remains unchanged, but the user that is emitting a sound changes, that is, the user B is not emitting a sound, and the user D is emitting a sound. When the electronic device receives a call audio signal sent by an electronic device of the user D, an image area of the user D includes the first marker 501. If the electronic device of the user A is the structure including the three sound emitting units shown in FIG. 2, a target sound outloud solution is the same as the sound outloud solution that corresponds to the three sound emitting units in the call scenario of the interface shown in FIG. 5C. If the electronic device of the user A is the structure including the four sound emitting units shown in FIG. 3, in a target sound outloud solution, the left screen sound emitting device 302 may be used as the primary sound emitting unit, and the top speaker 301, the right screen sound emitting device 303, or the bottom speaker 304 are used as the secondary sound emitting unit, so that the user A perceives from auditory experience that a sound of the user D is emitted from a middle left spatial area of the electronic device of the user A.

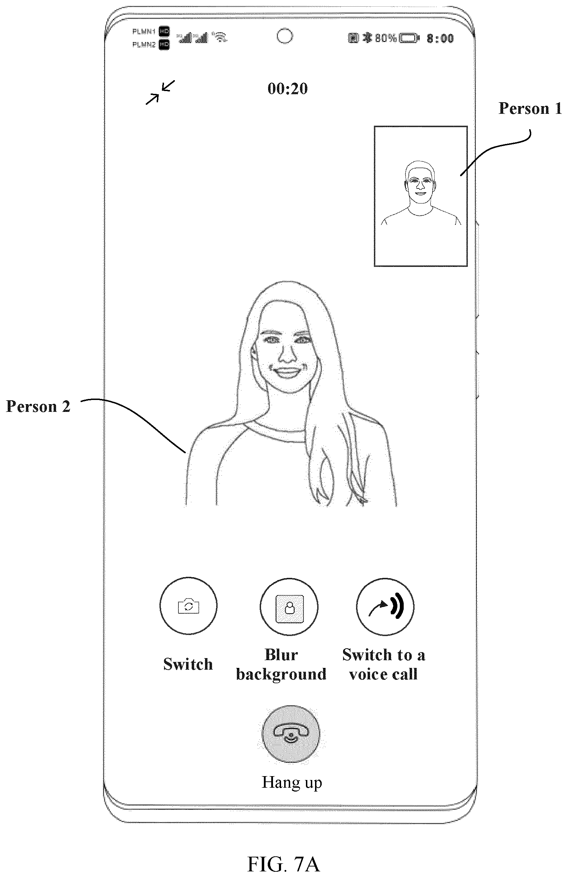

For example, FIG. 7A to FIG. 7D show a call application user interface displayed on an electronic device of a user during a video call between two users.

An interface shown in FIG. 7A includes images of the two user, and an image of a user B fills a screen of an electronic device of a user A and is displayed in a full-screen manner. An image of the user A is displayed in a non-full-screen manner and is displayed on the electronic device of the user A in a manner in which the image of the user A floats above the picture of the user A. The image of the user B includes an image of a person 2, and the image of the user A includes an image of a person 1. When the electronic device of the user A successfully establishes a video call connection to the electronic device of the user B, a sound emitting unit of the electronic device of the user A is in an enabled state by default, and the electronic device of the user A may receive a sound signal sent by the electronic device of the user B, and play a sound out loud by using the sound emitting unit.

On the interface shown in FIG. 7A, the image of the person 2 in the image of the user B is located in a middle area of the screen of the electronic device of the user A. In this case, if the person 2 is emitting a sound, the electronic device of the user A receives a call audio signal sent by the electronic device of the user B. In a call scenario of the interface shown in FIG. 7A, a target sound outloud solution for the electronic device of the user A including the three sound emitting units in FIG. 2 is the same as the sound outloud solution that corresponds to the three sound emitting units in the call scenario of the interface shown in FIG. 5C. A target sound outloud solution for the electronic device of the user A including the four sound emitting units in FIG. 3 is the same as the sound outloud solution that corresponds to the four sound emitting units in the call scenario of the interface shown in FIG. 5C. In this way, the user A perceives from auditory experience that the sound of the person 2 is sent in a spatial area in the middle of the screen of the electronic device of the user A.

In some embodiments, when the person 2 is far away from the camera of the electronic device B of the user and starts to move, or an angle deflection occurs in a process of obtaining a picture by the electronic device of the user B, a position of the image of the person 2 on the electronic device of the user A may change.

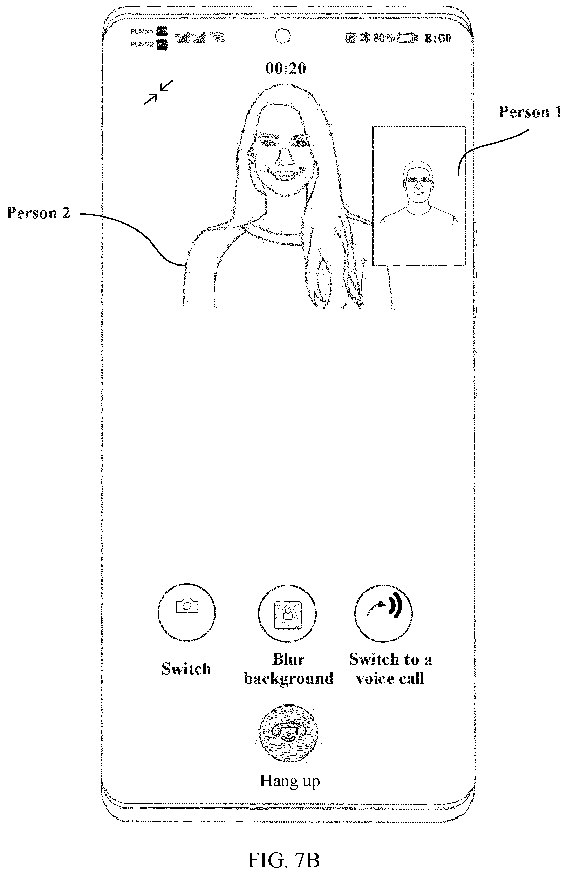

On an interface shown in FIG. 7B, the person 2 is located in an upper area of the screen of the electronic device of the user A. In this case, if the person 2 is emitting a sound, and the electronic device receives the call audio signal sent by the electronic device of the user B, in a call scenario of the interface shown in FIG. 7B, a target sound outloud solution for the electronic device of the user A including the three sound emitting units in FIG. 2 or the four sound emitting units in FIG. 3 is the same as the sound outloud solution that corresponds to the three sound emitting units in the call scenario of the interface shown in FIG. 5A. In the sound outloud solutions, a virtual sound image is controlled to be located in an upper spatial area in the screen of the electronic device of the user A, so that the user A perceives from auditory experience that the sound of the person 2 is emitted from the upper spatial area in the screen of the electronic device of the user A.

In some embodiments, when the camera of the electronic device of the user captures a plurality of persons, images of the plurality of persons may appear in the image of the user.

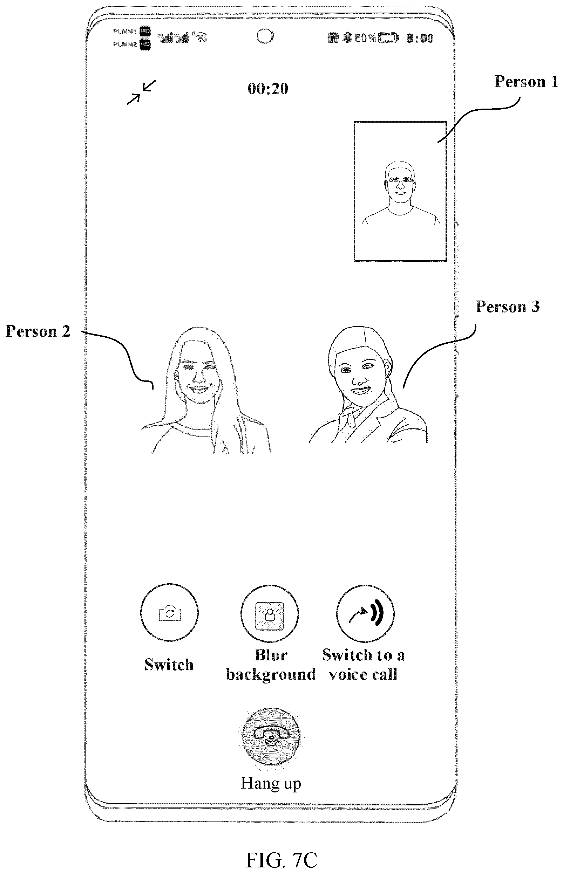

On the interface shown in FIG. 7C, the image of the user B includes the image of the person 2 and the image of the person 3, the image of the person 2 is located in a middle left area of the screen of the electronic device, and the image of the person 3 is located in a middle right area of the screen of the electronic device. When the person 2 is emitting a sound and the electronic device receives the call audio signal sent by the electronic device of the user B, in a call scenario of the interface shown in FIG. 7C, a target sound outloud solution for the electronic device of the user A including the three sound emitting units in FIG. 2 is the same as the sound outloud solution that corresponds to the three sound emitting units in a call scenario of the interface shown in (b) in FIG. 6. A target sound outloud solution for the electronic device of the user A including the four sound emitting units in FIG. 3 is the same as the sound outloud solution that corresponds to the four sound emitting units in a call scenario of the interface shown in (b) in FIG. 6. When the person 3 is emitting a sound and the electronic device receives a call audio signal sent by the electronic device of the user B, a target sound outloud solution for the electronic device of the user A including the three sound emitting units in FIG. 2 is the same as the sound outloud solution that corresponds to the three sound emitting units in the call scenario of the interface shown in (b) in FIG. 6. In the target sound outloud solution for the electronic device of the user A including the four sound emitting units in FIG. 3, the right screen sound emitting device 303 may be used as the primary sound emitting unit, and the top speaker 301, the left screen sound emitting device 302, or the bottom speaker 304 may be used as the secondary sound emitting unit. In this way, the user A perceives from auditory experience that a sound of the person 3 is emitted from an upper spatial area of the electronic device of the user A.

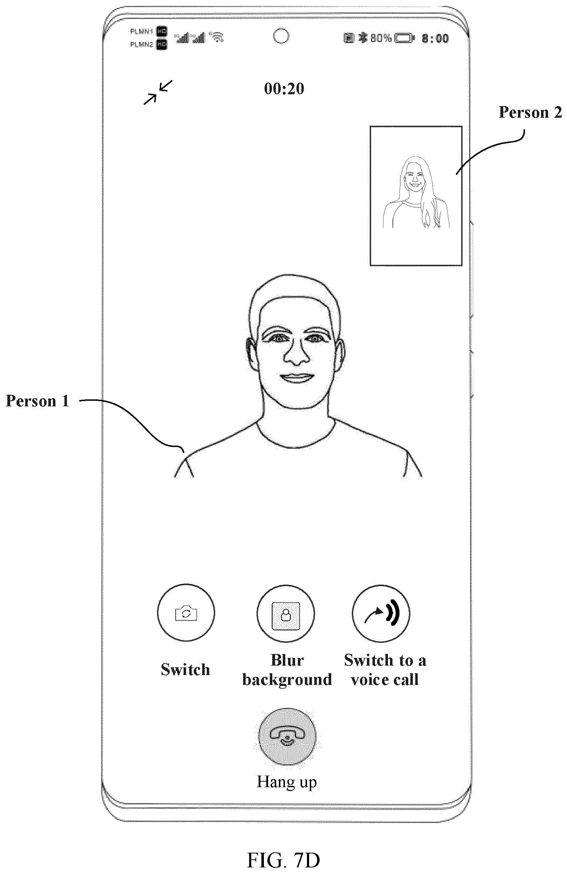

On the interface shown in FIG. 7A, an image of the user A is clicked, and in response to the click operation, the electronic device of the user A displays an interface shown in FIG. 7D. On the interface shown in FIG. 7D, an image of the user A fills the screen of the electronic device of the user A and is displayed in a full-screen manner, and an image of the user B is displayed in a non-full-screen manner and is displayed on the electronic device of the user A in a manner in which the image of the user B floats above the picture of the user A.

In some embodiments, the interface displayed in FIG. 7A may further include a camera switching control, a background blurring control, a switching-to-voice control, and a hang-up control. In addition, the interface may further include a display switching control (not shown in the figure). The display switching control is clicked, so that, in response to the click operation, the electronic device of the user A displays the interface shown in FIG. 7D.

The following describes a feature of an audio signal received by the primary sound emitting unit and the secondary sound emitting unit in this embodiment, sound emitting features of the primary sound emitting unit and the secondary sound emitting unit, and a principle of how the primary sound emitting unit and the secondary sound emitting unit interact with each other to control an orientation of a virtual sound image.

For example, on the interface shown in FIG. 5A, when the electronic device of the user A receives the call audio signal sent by the electronic device of the user B, if the electronic device of the user A is the structure including the three sound emitting units shown in FIG. 2, in a target sound outloud solution, the top speaker 201 may be used as the primary sound emitting unit, and the middle screen sound emitting device 202 or the bottom speaker 203 may be used as the secondary sound emitting unit, so that an orientation of a virtual sound image corresponds to a position of the image of the user B in the upper left of the screen of the electronic device of the user A. In this way, the user A perceives from auditory experience that a sound of the user B is emitted from an upper spatial area of the electronic device of the user A.

In this embodiment, the audio data received by the electronic device of the user A is processed based on a crosstalk cancellation principle of a sound. This implements the foregoing sound emitting effect.

For example, with reference to FIG. 2 and FIG. 4, the electronic device of the user A includes the three sound emitting units shown in FIG. 2. The electronic device of the user A performs processing to obtain downlink call audio data after receiving the call audio signal sent by the electronic device of the user B. The electronic device of the user A extends the single-channel downlink call audio data into a three-channel audio signal, namely, the audio signal 1, the audio signal 2, and the audio signal 3. The audio signal 1 corresponds to the top speaker 201, the audio signal 2 corresponds to the middle screen sound emitting device 202, and the audio signal 3 corresponds to the bottom speaker 203.

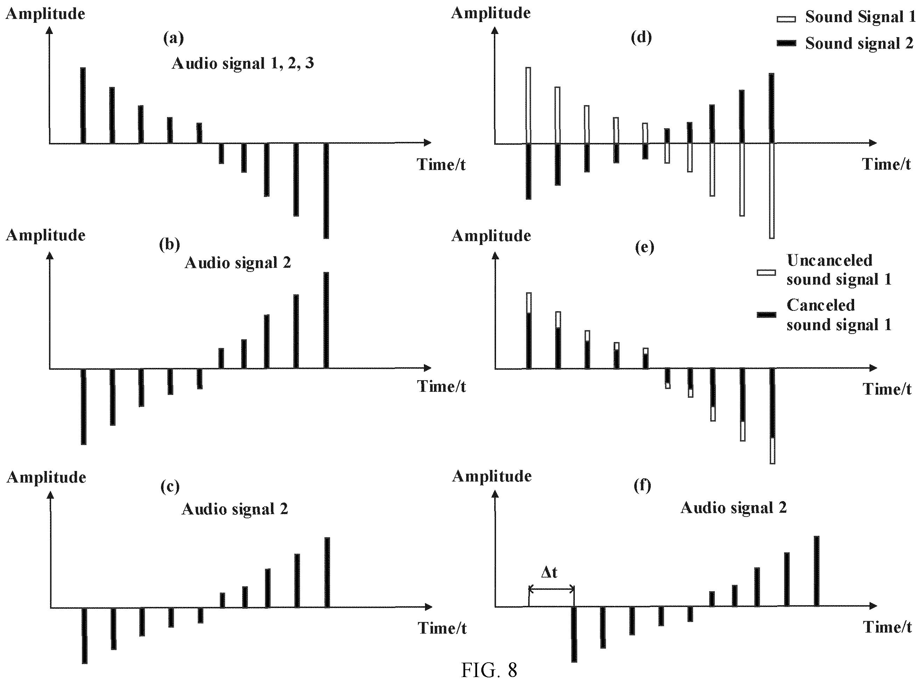

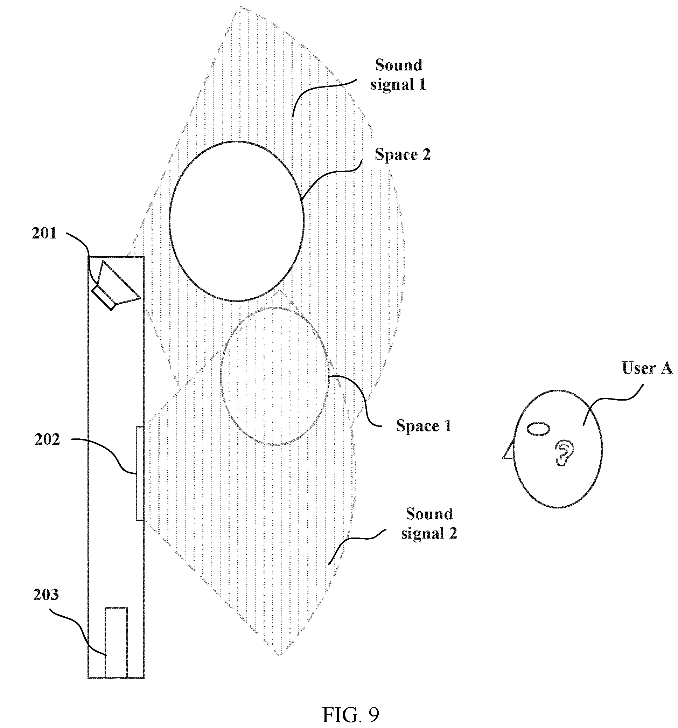

For example, FIG. 8 shows a process of processing audio data based on a crosstalk cancellation principle in this embodiment. FIG. 9 shows a spatial distribution feature of a sound field with a phenomenon of sound crosstalk cancellation during a call.

Still with reference to FIG. 4, FIG. 8, and FIG. 9, the electronic device separately performs independent parallel signal parameter processing on the audio signal 1, the audio signal 2, and the audio signal 3 to generate an outloud audio signal 1, an outloud audio signal 2, and an outloud audio signal 3. The signal parameter processing on the audio signal 1, the audio signal 2, or the audio signal 3 includes phase adjustment processing and gain adjustment processing. For example, phase adjustment processing may be performed on the audio signal 1, and gain adjustment processing may be performed on the audio signal 2 and/or the audio signal 3. Alternatively, gain adjustment processing may be performed on the audio signal 1, and phase adjustment processing may be performed on the audio signal 2 and/or the audio signal 3. Alternatively, phase adjustment processing and gain adjustment processing may be performed on the audio signal 1. Alternatively, phase adjustment processing and gain adjustment processing may be performed on the audio signal 2 and/or the audio signal 3.

For example, an example in which phase adjustment processing and gain adjustment processing are performed on the audio signal 2 is used herein.

For example, phase adjustment processing includes phase inversion processing. As shown in FIG. 8, (a) in FIG. 8 is an unprocessed audio signal 2, phase inversion processing is performed on the audio signal 2, to obtain a phase-inverted audio signal 2 shown in (b) in FIG. 8, and then gain reduction processing is performed on the phase-inverted audio signal 2 shown in (b) in FIG. 8, to obtain an audio signal 2 whose gain is reduced shown in (c) in FIG. 8.

Still with reference to FIG. 4, FIG. 8, and FIG. 9, the outloud audio signal 1 obtained after signal parameter processing is transmitted to the top speaker 201 after processing such as PA, to drive the top speaker 201 to output a sound signal 1, and the outloud audio signal 2 obtained after signal parameter processing is transmitted to the middle screen sound emitting device 202 after processing such as PA, to drive the middle screen sound emitting device 202 to send a sound signal 2. Because an amplitude of the outloud audio signal 1 is greater than an amplitude of the outloud audio signal 2, a sound press level (SP, sound press level) output by the top speaker 201 is greater than a sound press level output by the middle screen sound emitting device 202. The sound signal 1 and the sound signal 2 have a relationship shown in (d) in FIG. 8 in space of equal propagation distance: The sound signal 1 and the sound signal 2 have completely opposite phases. After the sound signal 1 and the sound signal 2 interact with each other in the space, as shown in (e) in FIG. 8, a part of the sound signal 1 is canceled. With reference to FIG. 9, for example, space in which the sound signal is partially canceled may be space 1 in FIG. 9. The space 1 is close to the top speaker 201 and the middle screen sound emitting device 202. Sound signals in the space 1 have opposite phases. After the sound signal is partially canceled, a remaining sound signal is relatively weak. In space 2 in which sound signal cancellation does not occur, the sound signal is relatively strong, so that the user A perceives from the auditory experience that the sound is emitted from the space 2, that is, the virtual sound image is in the space 2. Therefore, the orientation of the virtual sound image corresponds to the image position of the user B on the interface shown in FIG. 5A.

Still with reference to FIG. 4, FIG. 8, and FIG. 9, operations are performed to further move the space 1 downward. For example, processing on the audio signal 2 includes delaying processing. For example, after the audio signal 2 obtained after gain processing shown in (c) in FIG. 8 is delayed for Δ*t*, an audio signal 2 shown in (f) in FIG. 8 is obtained. After the processing, the sound signal 1 emitted by the top speaker 201 is delayed for a period of time before the middle screen sound emitting device 202 sends the sound signal 2. In this way, a crosstalk cancellation phenomenon of a sound may occur in space closer to the middle screen sound emitting device 202, so that the space 1 moves downward.

With reference to FIG. 4, filtering processing may be added in the call algorithm module of the electronic device, so that a filtered audio signal mainly includes a human voice audio signal, to improve audio signal processing efficiency. For example, filtering processing may be performed on a downlink call audio data, and then channel extension is performed on the filtered downlink call audio data. Alternatively, filtering processing may be performed on an audio signal obtained after channel extension, and other processing may be performed on the filtered audio signal. That filtering processing is performed on the audio signal obtained after channel extension may be that the filtering is performed on audio signals of all channels or that the filtering is performed on audio signals of some channels. Preferably, filtering processing may be performed on an audio signal on which phase adjustment needs to be performed, so that a quantity of data on which phase adjustment is performed is reduced. This may further reduce calculation difficulty of the call algorithm module.

In some embodiments, a frequency of the filtered audio signal is within a range of 20 Hz to 20 kHz. Preferably, the frequency of the filtered audio signal is within a range of 300 Hz to 3 kHz. More preferably, the frequency of the filtered audio signal is within a range of 1 kHz to 2 kHz.

It should be noted that, in this embodiment, whether processing is performed on an audio signal corresponding to the primary sound emitting unit or an audio signal corresponding to the secondary sound emitting unit is not limited, provided that it is ensured that strength of a sound signal emitted by the primary sound emitting unit is greater than strength of a sound signal emitted by the secondary sound emitting unit, and that the sound signals emitted by the primary sound emitting unit and the secondary sound emitting unit are partially canceled in space in which a sound needs to be canceled. In addition, a sequence of phase adjustment processing and gain processing in this embodiment may be adjusted.

Similarly, when the image of the user B is located in a middle or a lower part of the screen of the electronic device of the user A, the audio signals corresponding to the primary sound emitting unit and to the secondary sound emitting unit may be processed based on a target sound emitting strategy, so that the virtual sound image is respectively located in a middle spatial area and a lower spatial area of the electronic device of the user A.

After a principle of how the primary sound emitting unit and the secondary sound emitting unit cooperate to control the orientation of the virtual sound image is explained, with reference to FIG. 4 to FIG. 6, the following further describes in detail a specific process of implementing a target sound outloud solution based on coordinates of a sound emitting object of another party relative to a screen of an electronic device in different call scenarios.

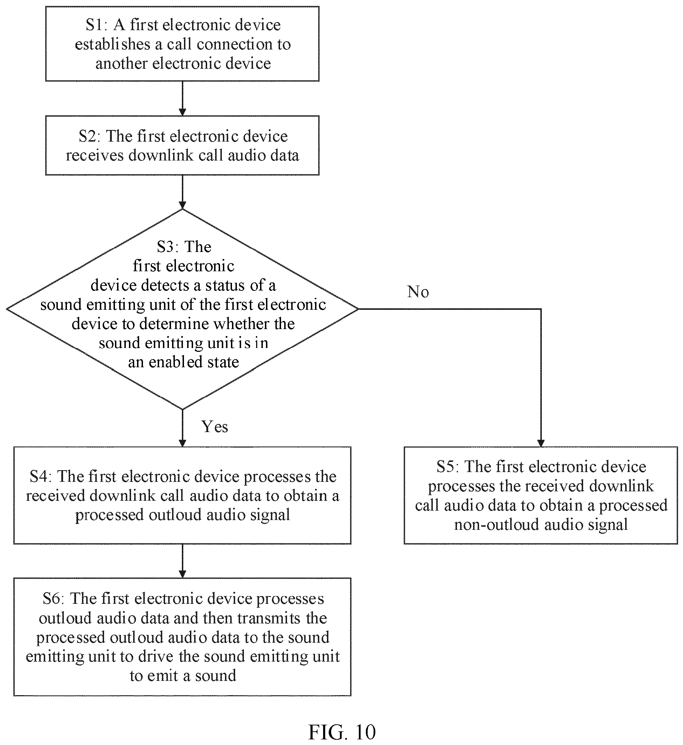

As shown in FIG. 10, the process includes at least the following steps.

Step S1: A first electronic device establishes a call connection to another electronic device.

The first electronic device establishes the call connection to the another electronic device. There may be one or more other electronic devices, and a call may be a voice call or a video call. After the first electronic device establishes the call connection to the another electronic device, the first electronic device may receive call audio data sent by the another electronic device to the first electronic device. When the call is in a video call scenario, the first electronic device may further receive video stream data sent by the another electronic device to the first electronic device. With reference to FIG. 5A to FIG. 7D, the first electronic device may be an electronic device of a user A, a second electronic device may be an electronic device of a user B, and a third electronic device may be an electronic device of a user C.

When the first electronic device simultaneously establishes a call connection to the second electronic device and the third electronic device, the first electronic device displays a first interface.

For example, the first interface may be the interface shown in FIG. 5A. The first interface includes a first image, a second image, and a third image. For example, the first image may be the image of the user A shown in FIG. 5A, the second image may be the image of the user B shown in FIG. 5A, and the third image may be the image of the user C shown in FIG. 5A. The first image, the second image, and the third image may be static images, or may be dynamic images. For example, the static image may be a profile picture, a name, or the like of the user, and the dynamic image may be a picture collected by a camera of a corresponding user electronic device.

For example, the first interface may alternatively be the interface shown in FIG. 7A. In this case, the first interface includes the first image and the second image, the first image may be the image of the user A, the second image may be the image of the user B, the first image and the second image are both dynamic images, the second image fills a screen of the first electronic device, the second image includes an image of a second user, and the second user may be the person 2 shown in FIG. 7A.

Step S2: The first electronic device receives downlink call audio data.

As described above, after the first electronic device establishes the call connection to the another electronic device, the first electronic device may receive a call audio signal sent by the another electronic device to the first electronic device. The call audio signal is processed to generate downlink call audio data. The call audio signal received by the first electronic device may be sent by one or more other devices.

When the call audio signal sent by the another electronic device is received, it indicates that a user corresponding to the electronic device is emitting a sound. For example, on the interface shown in FIG. 5A, when the user B is emitting a sound, the first electronic device may receive a call audio signal sent by the second electronic device. On the interface shown in FIG. 5B, when the user C is emitting a sound, the first electronic device may receive a call audio signal sent by the third electronic device. On the interface shown in (b) in FIG. 6, when the user D is emitting a sound, the first electronic device may receive a call audio signal sent by a fourth electronic device.

During a video call, the first electronic device may further receive video data sent by the another electronic device to the first electronic device. On the interface shown in FIG. 7A, the image of the user B is a dynamic image obtained by a camera of the second electronic device. The first electronic device receives video data sent by the second electronic device, processes the video stream data, and then displays the video stream data on the screen in a dynamic image manner. When the person 2 in the image of the user B is emitting a sound, the first electronic device further receives the call audio signal sent by the second electronic device.

Step S3: The first electronic device detects a status of a sound emitting unit of the first electronic device to determine whether the sound emitting unit is in an enabled state.

After the first electronic device receives the downlink call audio data, the first electronic device detects whether the sound emitting unit of the first electronic device is in the enabled state. If the sound emitting unit of the first electronic device is in the enabled state, step S4 (refer to the following description) is performed, that is, the downlink call audio data is processed based on a call algorithm used when a sound is played out loud, to obtain a processed outloud audio signal. Otherwise, step S5 (refer to the following description) is performed, that is, the downlink call audio data is processed based on a call algorithm used when a sound is not played out loud, to obtain a processed non-outloud audio signal.

For example, as shown in FIG. 5A, after the first electronic device establishes the call connection to the another device, all sound emitting units of the first electronic device may be in the enabled state by default. If the sound emitting unit of the first electronic device is in a disabled state, an operation on a speaker control on a call application interface may be performed, so that the sound emitting unit is in the enabled state. If the first electronic device remains connected to another sound emitting apparatus (for example, a wired headset, a Bluetooth headset, and an acoustic system), the first electronic device may be disconnected from the another sound emitting apparatus, so that the sound emitting unit is in the enabled state.

Step S4: The first electronic device processes the received downlink call audio data to obtain the processed outloud audio signal.

With reference to FIG. 4, when the first electronic device receives the downlink call audio data and the sound emitting unit is in the enabled state, the first electronic device processes the downlink call audio data. As described above, the processing includes channel extension processing, and single-channel downlink audio data is extended to a multi-channel audio signal. When a specific condition is met, the first electronic device may transmit obtained coordinate information of a sound emitting object of another party relative to the screen of the first electronic device to a call algorithm module, so that the call algorithm module of the first electronic device generates a signal processing parameter control strategy based on the coordinate information, and performs signal parameter processing on the multi-channel audio signal.

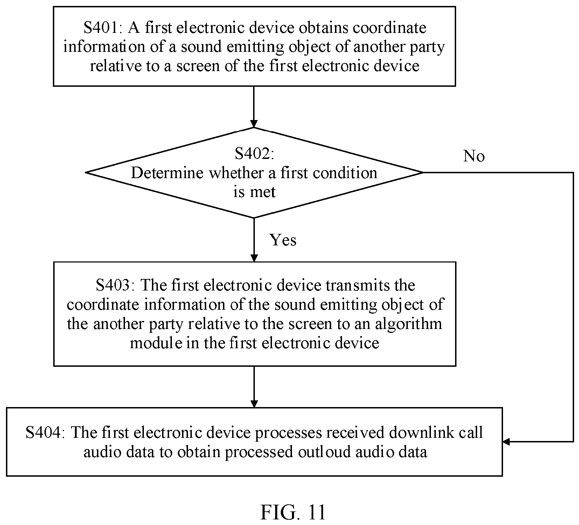

FIG. 11 shows a method in which the electronic device obtains the coordinate information of the sound emitting object of the another party relative to the screen, and transmits the coordinate information to the algorithm. The method includes the following steps.

Step S401: The first electronic device obtains the coordinate information of the sound emitting object of the another party relative to the screen of the first electronic device.

For example, the first electronic device has a screen analysis function, and the screen analysis function may be used to analyze a position of the sound emitting object of the another party on the screen of the first electronic device, to obtain an area or coordinates of the sound emitting object of the another party on the screen. Refer to FIG. 10. That the screen analysis function is used to analyze the position of the sound emitting object of the another party may be started immediately after the step S1 (the first electronic device establishes the call connection to the another electronic device), or may be started after the step S2 (the first electronic device receives the downlink call audio data).

In some embodiments, the coordinate information of the sound emitting object of the another party relative to the screen may be obtained in a screen division manner. For example, area division is performed on the screen of the first electronic device. In this case, the coordinate information of the sound emitting object of the another party relative to the screen refers to a screen area in which a user image is located.

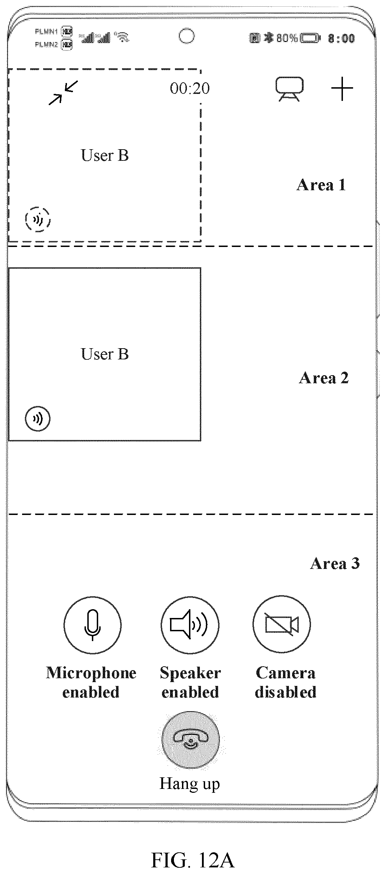

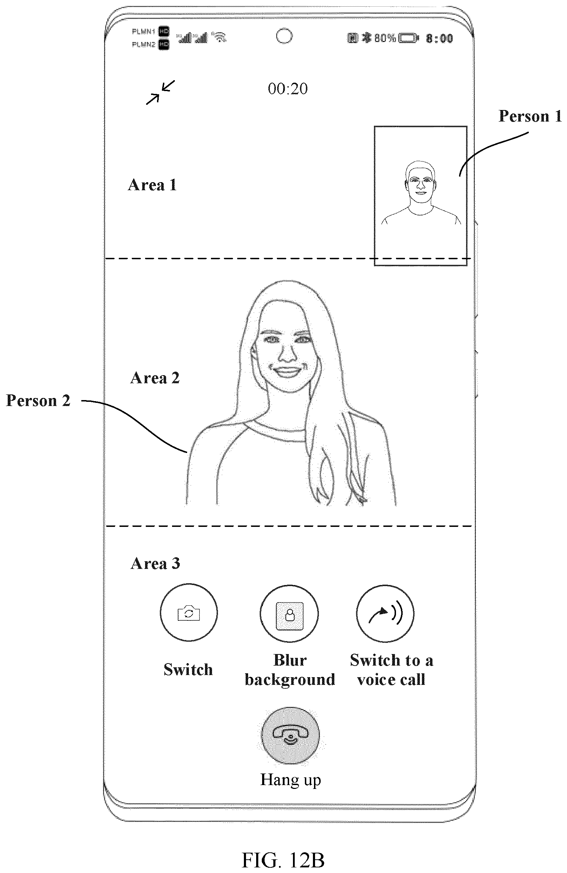

For example, as shown in FIG. 12A and FIG. 12B, the screen of the electronic device is equally divided along a long side of the screen into an area 1, an area 2, and an area 3. Sizes of the area 1, the area 2, and the area 3 are approximately equal.

As shown in FIG. 12A, the image of the user B is displayed in a non-full-screen manner. The image of the user B may be located in any one of the area 1, the area 2, or the area 3. The first electronic device has the screen analysis function, and may obtain through analysis the screen area in which the image of the user B is located, to obtain the coordinate information of the sound emitting object of the another party relative to the screen. In this case, the screen analysis function of the first electronic device may be integrated into the call application, or not integrated into the call application.

For example, the screen area in which the user image is located may be determined based on a size of the user image in each area. For example, if a size of the user image in the area 1 is the largest, the user image is located in the area 1. Alternatively, the screen area in which the user image is located may be determined based on an area in which a feature point of the user image falls, and the feature point may be a geometric center point or a gravity center point of the user image. For example, when the user image is a square or a rectangle, a position of a small icon may be determined based on an area in which an intersection point of diagonal lines of the square or the rectangle falls. When the user image is a circular or an oval, the position of the small icon may be determined based on an area in which a center of the circular or the oval falls. A manner of determining the area in which the user image is located is not specifically limited in this embodiment.

As shown in FIG. 12B, the image of the user B is displayed in a full-screen display manner. The image of the user B includes the image of the person 2. The person 2 may be located in any one of the area 1, the area 2, or the area 3. The first electronic device may enable the screen analysis function to analyze a screen area in which the image of the person 2 is located, to obtain the coordinate information of the sound emitting object of the another party relative to the screen. For example, the screen analysis function of the first electronic device may be a video image semantic analysis function.

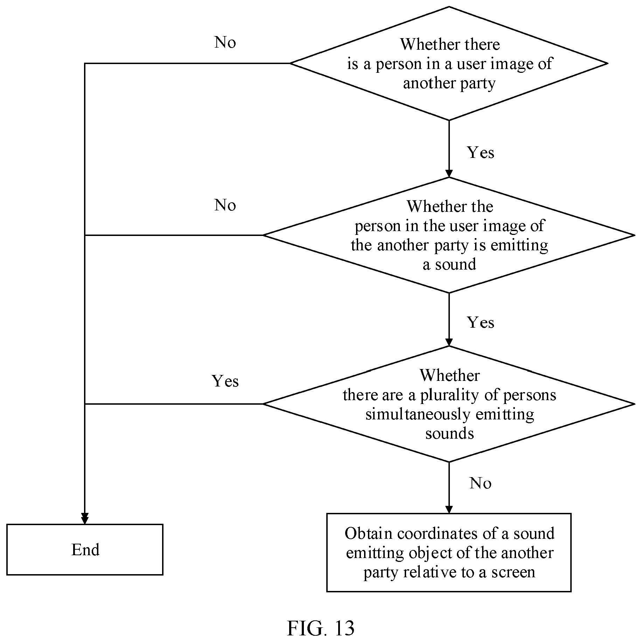

For example, FIG. 13 shows one execution process of using the video image semantic analysis function to obtain the coordinate information of the sound emitting object of the another party relative to the screen. As shown in FIG. 13, whether there is a person in a user image of the another party is first determined, and if there is not a person, the execution process ends. If there is a person, whether the person is emitting a sound is further determined. If the person of the another party is not emitting a sound, the execution process ends. If the person of the another party is emitting a sound, whether there are a plurality of persons simultaneously emitting sounds is further determined. If there are a plurality of persons simultaneously emitting sounds, the execution process ends. If there are not a plurality of persons simultaneously emitting sounds, coordinate information of a sound emitting object of the another party relative to a screen is obtained.

During determining whether there is a person in the user image of the another party, there may be one or more persons in the user image of the another party, or there may not be a person in the user image of the another party. For example, when there is only one person in the user image of the another party, it indicates that there is only one person in a range of a picture obtained by the camera of the electronic device of the another party. When there are a plurality of persons in the picture of the another party, it indicates that there are the plurality of persons in the range of the picture obtained by the camera of the electronic device of the another party. When there is not a person in the picture of the another party, it indicates that, in this case, there is not a sound emitting person object, and coordinates of the sound emitting person object do not need to be obtained, and the execution process ends.

A mouth action of the person in the picture of the another party is captured, to determine whether the person in the user image of the another party is emitting a sound. When a mouth feature of the person in the picture of the another party cannot be captured, or even when the mouth feature of the person in the picture of the another party is captured but talking actions such as opening and closing of the mouth of the person in the picture of the another party cannot be captured, it is considered that the person in the picture of the another party is not emitting a sound, and the execution process ends. It should be noted that, that whether the person of the another party emits a sound is determined based on the mouth action of the person of the another party is merely an example. Whether the person of the another party emits a sound may be further determined based on a body action of the person of the another party.

With reference to FIG. 12B, the area in which the person 2 is located may be determined based on a size of a head, a face, or a mouth of the person 2 in each area. If a size of the head, the face, or the mouth in a specific area is the largest, the person 2 is located in the area. Alternatively, the area in which the person 2 is located may be determined based on an area in which a head feature point, a face feature point, or a mouth feature point of the person 2 falls, and the selected feature point may be a gravity center point of the head area, the face area, or the mouth area. A method for determining an area in which a sound emitting person object falls is not limited in this embodiment.

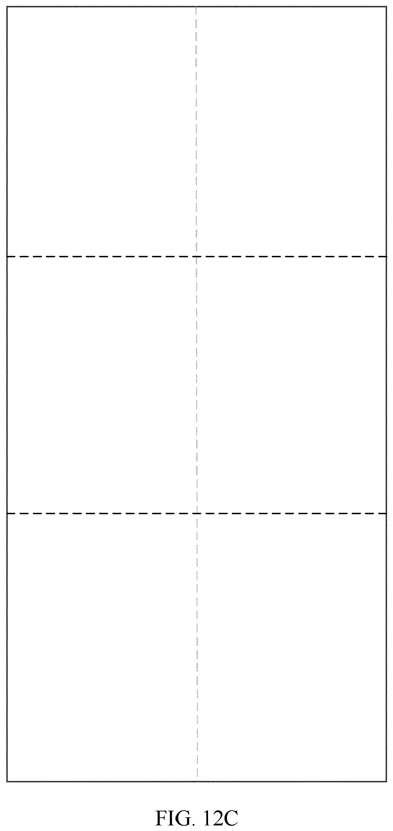

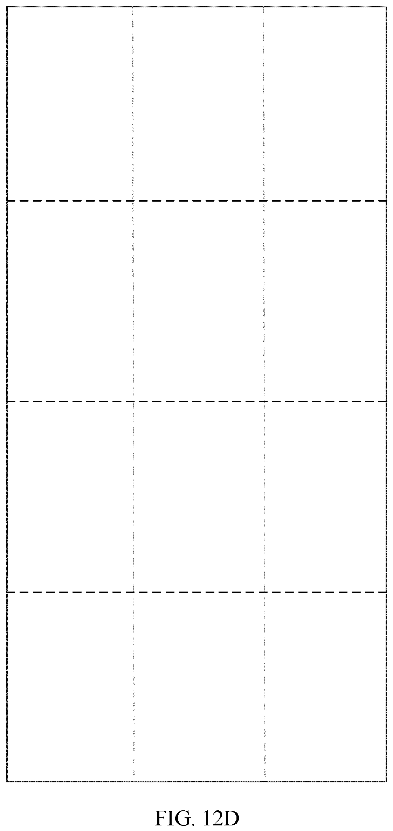

It should be noted that the foregoing area solution of the screen is merely an example. In this solution, the screen may be more carefully divided based on a quantity of sound emitting units and positions of the sound emitting units. As shown in FIG. 12C and FIG. 12D, the screen may be divided into six areas of 3 (long side) × 2 (short side), 12 areas of 4 (long side) × 3 (short side), and the like.

In some other embodiments, after using the screen analysis function to obtain the feature point, for example, the geometric center point or the gravity center point of the user image, the first electronic device directly uses the geometric center point or the gravity center point as the coordinates of the sound emitting object of the another party relative to the screen. Alternatively, after using the video image semantic analysis function to obtain the head feature point, the face feature point, and the mouth feature point of the person in the user image of the another party, the first electronic device directly uses coordinates of the head feature point, the face feature point, or the mouth feature point as the coordinates of the person 2 relative to the screen.

Step S402: Determine whether a first condition is met.

After the first electronic device obtains coordinates of the sound emitting object of the another party relative to the first electronic device, whether the first condition is met is determined. In a case in which the first condition is met, step S403 (refer to the following description) is performed, that is, the first electronic device may transmit the coordinate information of the sound emitting object of the another party to the algorithm module. If the first condition is not met, step S404 (namely, the step S4, for which refer to the foregoing description) is performed, that is, the first electronic device does not transmit the coordinates of the sound emitting object of the another party to the algorithm module, and the first electronic device performs conventional processing on the downlink call audio data.

For example, the first condition may be that downlink call audio data received by the first electronic device at a same moment includes only one human voice audio signal. The first condition is set, so that it can be ensured that only one person emits a sound at a specific moment.

With reference to the interface shown in FIG. 5A, when only the user B separately emits a sound, downlink call audio data received at a same moment by the first electronic device includes only a human voice audio signal of the user B, which meets the first condition, so that the coordinate information of the image of the user B may be transmitted to the algorithm module.

Alternatively, the first condition may be that downlink call audio data received by the first electronic device at a same moment includes only one human voice audio signal that meets a second condition. In this case, there may be one or more human voice audio signals, but only one human voice audio signal meets the condition. For example, the second condition may be that signal strength is greater than a first threshold. Strength of the human voice audio signal is greater than the first threshold, so that strength of the human voice can be ensured.

Still with reference to the interface shown in FIG. 5A, when the user B and the user C simultaneously emit a sound, the downlink call audio data received at the same moment by the first electronic device includes the human voice audio signal of the user B and human voice audio signal of the user C. If a call sound of the user B is relatively large and meets the condition that signal strength is greater than the first threshold while a call sound of the user C is relatively small and does not meet the condition that signal strength is greater than the first threshold, the first condition is met, and the first electronic device transmits coordinate information of a picture of the user B in the screen to the call algorithm module of the first electronic device. If both the call sound of the user B and the call sound of the user C are relatively large and meet the condition that signal strength is greater than the first threshold, the first condition is not met, and the first electronic device does not transmit the coordinate information of the picture of the user B or coordinate information of a picture of the user C to the call algorithm module, and the first electronic device processes the audio signal in a conventional method.

Step S403: The first electronic device transmits the coordinate information of the sound emitting object of the another party relative to the screen to the call algorithm module in the first electronic device.

As described above, after the first condition is met, the first electronic device transmits the coordinate information of the sound emitting object of the another party relative to the screen to the call algorithm module in the first electronic device. For example, if the call application of the first electronic device performs a function of obtaining the coordinates, the call application of the first electronic device may transmit the coordinate information to the call algorithm module.

In this embodiment, a correspondence between the coordinates of the sound emitting object of the another party relative to the screen and a target sound outloud solution may be established. After the coordinates of the sound emitting object of the another party relative to the screen are obtained, the target sound outloud solution may be determined based on the correspondence, and an audio signal processing strategy in a corresponding sound emitting unit may be further determined based on the target sound outloud solution.

In an implementation, a correspondence between a screen division area in step S2 and the target sound outloud solution may be established, to establish the correspondence between the coordinates of the sound emitting object of the another party relative to the screen and the target sound outloud solution. In this way, the target sound outloud solution may be determined based on a specific area of the sound emitting object of the another party on the screen.

For example, as shown in Table 1, the table shows a correspondence that is between an area of the sound emitting object of the another party on the screen and a target sound outloud solution and that exists when the electronic device includes the three sound emitting units, namely, the top speaker 201, the middle screen sound emitting device 202, and the bottom speaker 203 shown in FIG. 2, and the screen is divided into the area 1, the area 2, and the area 3 in the manner in FIG. 12A.

When the coordinate information that is of the sound emitting object of the another party and that is received by the algorithm module indicates that the sound emitting object of the another party is located in the screen area 1, the target sound outloud solution is: The top speaker 201 is a primary sound emitting unit, and at least one of the middle screen sound emitting device 202 and the bottom speaker 203 is a secondary sound emitting unit. According to the described correspondence between the sound emitting unit and the audio signal in FIG. 4, the top speaker 201 corresponds to the audio signal 1, the middle screen sound emitting device 202 corresponds to the audio signal 2, and the bottom speaker 203 corresponds to the audio signal 3. The first electronic device processes the audio signal 1, the audio signal 2, and the audio signal 3 based on features of the outloud audio signals (refer to FIG. 8) in the foregoing primary sound emitting unit and secondary sound emitting unit. Details are not described herein again. When the sound emitting object of the another party is located in the area 2 or the area 3, the target sound outloud solution and the audio signal processing strategy are also determined in a similar manner.

**Table 1**

| Area of the sound emitting object of the another party in the screen | Target sound outloud solution |
|---|---|
| Area 1 | The top speaker 201 is the primary sound emitting unit, and at least one of the middle screen sound emitting device 202 and the bottom speaker 203 is the secondary sound emitting unit. |
| Area 2 | The middle screen sound emitting device 202 is the primary sound emitting unit, and at least one of the top speaker 201 and the bottom speaker 203 is the secondary sound emitting unit. |
| Area 3 | The bottom speaker 203 is the primary sound emitting unit, and at least one of the top speaker 201 and the middle screen sound emitting device 202 is the secondary sound emitting unit. |

It should be noted that the foregoing screen area division manner of the three sound emitting units and the correspondence between the screen area and the target sound outloud solution are merely examples. A quantity of sound emitting units is not specifically limited in this embodiment. Provided that there are two or more sound emitting units, the sound outloud solution including the primary sound emitting unit and the secondary sound emitting unit in this embodiment may be implemented. When the quantity of sound emitting units is increased, there may be more screen division manners and the screen division manners may be more flexible. For example, when the electronic device is the electronic device that is shown in FIG. 3 and that includes the left screen sound emitting device 302 and the right screen sound emitting device 303, in the screen division manner, areas of left and right orientations may be set. When a position of the sound emitting unit changes, a screen division logic may also change accordingly.

In addition, the primary sound emitting unit may include one or more speakers and/or screen sound emitting devices. The secondary sound emitting unit may include one or more speakers and/or screen sound emitting devices.

In another implementation, the correspondence between the coordinates of the sound emitting object of the another party relative to the screen and the target sound outloud solution is established, and the target sound outloud solution may be determined based on a distance between the feature point of the sound emitting object of the another party and the sound emitting unit.

For example, according to the foregoing content, after using the screen analysis function to obtain the feature point, for example, the geometric center point or the gravity center point of the user image, the first electronic device directly uses the geometric center point or the gravity center point as the coordinates of the sound emitting object of the another party relative to the screen. Alternatively, after using the video image semantic analysis function to obtain the head feature point, the face feature point, and the mouth feature point of the person in the user image of the another party, the first electronic device directly uses coordinates of the head feature point, the face feature point, or the mouth feature point as the coordinates of the person 2 relative to the screen.

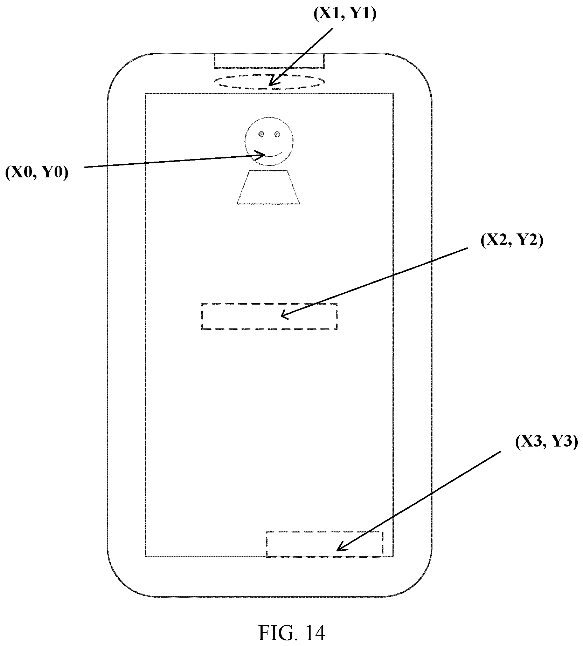

As shown in FIG. 14, with reference to the electronic device including the three sound emitting units shown in FIG. 2, the coordinates of the sound emitting object of the another party relative to the screen are (X0, Y0), coordinates of the top speaker 201 are (X1, Y1), coordinates of the middle screen sound emitting device 202 are (X2, Y2), and coordinates of the bottom speaker 203 are (X3, Y3). A distance L between the sound emitting object of the another party and each sound emitting unit may be obtained through calculation. For example,
a distance L1 between the sound emitting object of the another party and the top speaker $201 = \sqrt{{\left(X1-X0\right)}^{2} + {\left(Y1-Y0\right)}^{2}}$;
a distance L2 between the sound emitting object of the another party and the middle screen sound emitting device $202 = \sqrt{{\left(X2-X0\right)}^{2} + {\left(Y2-Y0\right)}^{2}}$; and
a distance L3 between the sound emitting object of the another party and the bottom speaker $203 = \sqrt{{\left(X3-X0\right)}^{2} + {\left(Y3-Y0\right)}^{2}}$.

For example, a relationship between L and the target sound outloud solution may be established. For example, when L is less than a specific threshold, a corresponding sound emitting unit may be determined as the primary sound emitting unit. When L is greater than a specific threshold, a corresponding sound emitting unit may be determined as the secondary sound emitting unit. After the primary sound emitting unit and the secondary sound emitting unit are determined, an audio signal processing parameter control strategy may be generated in the foregoing manner. Details are not described herein again.

For example, the electronic device receives the coordinate information of the sound emitting object of the another party, and the coordinate information indicates that the sound emitting object of the another party is located at a position of a point A on the screen. If L1 is less than a preset first threshold and L2 and L3 are greater than a preset second threshold after calculation is performed, in the target sound outloud solution, the top speaker 201 is the primary sound emitting unit, the middle screen sound emitting device 202 and the bottom speaker 203 are secondary sound emitting units. In this way, after receiving the coordinate information, the algorithm module of the electronic device processes the downlink call audio signal based on features of outloud audio signals in the primary sound emitting unit and the secondary sound emitting unit.

For example, for a sound emitting unit of the speaker, coordinates of the sound emitting unit may be coordinates of a point in a projection area that is of the sound emitting unit and components of the sound emitting unit and that is on a plane parallel to the screen of the electronic device. For a sound emitting unit of the screen sound emitting device, coordinates of a gravity center of a projected silhouette of the screen sound emitting device on the screen plane may be selected as coordinates of the sound emitting unit.

Step S5: The first electronic device processes the received downlink call audio data to obtain a processed non-outloud audio signal.

As described above, when the first electronic device detects that the status of the sound emitting unit is in the disabled state, in this case, the electronic device performs processing in a non-outloud scenario on the received downlink call audio data to obtain a conventionally processed non-outloud audio signal. In this processing manner, the coordinate information of the sound emitting object of the another party relative to the screen of the first electronic device is not used as a consideration factor.

Step S6: The first electronic device transmits processed outloud audio data to the sound emitting unit to drive the sound emitting unit to emit a sound.

After processing audio data in each call in the call algorithm module, the first electronic device obtains the outloud audio data. After performing processing, such as PA, on the outloud audio data, the first electronic device transmits the outloud audio data to a corresponding sound emitting unit to drive the sound emitting unit to emit a sound. The audio signals of each channel are processed based on the target sound outloud solution. Therefore, a sound emitting effect of the sound emitting unit can implement a target sound emitting effect.

The following further describes the solution of this application with reference to specific embodiments.

Specifically, this application provides a first audio playback method, applied to a first electronic device including a first sound emitting unit and a second sound emitting unit, and the method includes:
the first electronic device establishes call connections to a second electronic device and a third electronic device;
the first electronic device displays a first interface, where the first interface includes a first image, a second image, and a third image, the first image, the second image, and the third image are located at different positions of the first interface, the first image is associated with a first user, the first user talks through the first electronic device, the second image is associated with a second user, the second user talks through the second electronic device, the third image is associated with a third user, the third user talks through the third electronic device, and the first sound emitting unit and the second sound emitting unit are in an enabled state;
the first electronic device receives an audio signal sent by the second electronic device or the third electronic device;
the first sound emitting unit of the first electronic device outputs a first sound signal, where the first sound signal is obtained by processing the audio signal sent by the second electronic device or the third electronic device; and
the second sound emitting unit of the first electronic device outputs a second sound signal, where the second sound signal is obtained by processing the audio signal sent by the second electronic device or the third electronic device, and
when the second user emits a sound, strength of the first sound signal is greater than strength of the second sound signal.

For example, in the first audio playback method, the first interface may correspond to any interface in FIG. 5A to FIG. 5E, the first electronic device may be an electronic device of a user A, the second electronic device may be an electronic device of a user B, and the third electronic device may be an electronic device of a user C. The first image is an image associated with the user A, the second image is an image associated with the user B, and the third image is an image associated with the user C.

This application further provides a second audio playback method, applied to a first electronic device including a first sound emitting unit and a second sound emitting unit, and the method includes:
the first electronic device displays a first interface after the first electronic device establishes a call connection to a second electronic device, where the first interface includes a first image and a second image, the first image is associated with a first user, the first user makes a call by using the first electronic device, the second image is associated with a second user, the second user makes a call by using the second electronic device, the second image is a dynamic image, the second image covers a screen of the first electronic device, the second image includes an image of the second user, and the first sound emitting unit and the second sound emitting unit are in an enabled state;
the first electronic device receives an audio signal sent by the second electronic device;
the first sound emitting unit of the first electronic device outputs a first sound signal, where the first sound signal is obtained by processing the audio signal sent by the second electronic device; and
the second sound emitting unit of the first electronic device outputs a second sound signal, where the second sound signal is obtained by processing the audio signal sent by the second electronic device, and
when the image of the second user in the second image is located at a first position on the screen of the first electronic device, strength of the first sound signal is greater than strength of the second sound signal, or
when the image of the second user in the second image is located at a second position on the screen of the first electronic device, strength of the second sound signal is greater than strength of the first sound signal.

For example, in the second audio playback method, the first interface corresponds to any interface in FIG. 7A to FIG. 7D, the first electronic device may be an electronic device of a user A, and the second electronic device may be an electronic device of a user B. FIG. 7A and FIG. 7B are used as examples. The first image corresponds to an image that includes a person 1, the second image is an image that includes a person 2, and the first position is a position of the person 2 shown in FIG. 7A, and the second position is a position of the person 2 shown in FIG. 7B.

According to the foregoing audio playback method, in a scenario of a multi-person voice/video call or a dual-person video call, a sound of a call object may be mapped to a position of the call object on a screen of the electronic device. In particular, in this embodiment, coordinates of a sound emitting object of another party on the screen may be obtained. The coordinates of the sound emitting object of the another party relative to the screen are used as one input in an algorithm module, to process an audio signal in each channel, so that after a sound emitting unit plays an audio signal processed by using a call algorithm, a virtual sound image position of a sound emitted by the sound emitting unit has a good correspondence with a position of the sound emitting object of the another party on the screen. In this way, a user can determine, based on the sound, an approximate orientation of the sound emitting object of the another party on the screen. This improves an imaging sense of the sound and improves user experience.

The foregoing describes in detail the audio playback method and the electronic device provided in the present invention. Embodiments in this specification are described in a progressive manner. Each embodiment focuses on a difference from other embodiments, and reference may be made to each other for the same or similar parts among embodiments. It should be noted that, a person of ordinary skill in the art can further make some improvements and modifications to the present invention without departing from the principles of the present invention, and the improvements and modifications shall fall within the protection scope of the present invention.

## Claims

1. An audio playback method, wherein the method is applied to a first electronic device (110, 194) comprising a first sound emitting unit (170A, 201, 301) and a second sound emitting unit (202, 203, 302, 303, 304), wherein, in a first alternative, the method comprises:
receiving, by the first electronic device (110, 194), an audio signal sent by the second electronic device or the third electronic device;
outputting, by the first sound emitting unit (170A, 201, 301) of the first electronic device (110, 194), a first sound signal, wherein the first sound signal is obtained by processing the audio signal sent by the second electronic device or the third electronic device; and
outputting, by the second sound emitting unit (202, 203, 302, 303, 304) of the first electronic device (110, 194), a second sound signal, wherein the second sound signal is obtained by processing the audio signal sent by the second electronic device or the third electronic device, and
when the second user speaks, intensity of the first sound signal is greater than intensity of the second sound signal,
and
establishing (S1), by the first electronic device (110, 194), call connections to a second electronic device and a third electronic device;
displaying, by the first electronic device (110, 194), a first interface, wherein the first interface comprises a first image, a second image, and a third image, the first image, the second image, and the third image are located at different positions of the first interface, the first image is associated with a first user, the first user talks through the first electronic device (110, 194), the second image is associated with a second user, the second user talks through the second electronic device, the third image is associated with a third user, the third user talks through the third electronic device, and the first sound emitting unit (170A, 201, 301) and the second sound emitting unit (202, 203, 302, 303, 304) are in an enabled state; and
the first sound signal and the second sound signal having opposite phases in first space;
or, in a second alternative, the method comprises:
receiving, by the first electronic device (110, 194), an audio signal sent by the second electronic device;
outputting, by the first sound emitting unit (170A, 201, 301) of the first electronic device (110, 194), a first sound signal, wherein the first sound signal is obtained by processing the audio signal sent by the second electronic device; and
outputting, by the second sound emitting unit (202, 203, 302, 303, 304) of the first electronic device (110, 194), a second sound signal, wherein the second sound signal is obtained by processing the audio signal sent by the second electronic device, and
when the image of the second user in the second image is located at a first position on the screen of the first electronic device (110, 194), intensity of the first sound signal is greater than intensity of the second sound signal, or
when the image of the second user in the second image is located at a second position on the screen of the first electronic device (110, 194), intensity of the second sound signal is greater than intensity of the first sound signal,
displaying, by the first electronic device (110, 194), a first interface after the first electronic device (110, 194) establishes a call connection to a second electronic device, wherein the first interface comprises a first image and a second image, the first image is associated with a first user, the first user talks through the first electronic device (110, 194), the second image is associated with a second user, the second user talks through the second electronic device, the second image is a dynamic image, the second image covers a screen of the first electronic device (110, 194), the second image comprises an image of the second user, and the first sound emitting unit (170A, 201, 301) and the second sound emitting unit (202, 203, 302, 303, 304) are in an enabled state,
**characterized in that**
when the image of the second user in the second image is located at the first position on the screen of the first electronic device (110, 194), the first sound signal and the second sound signal have opposite phases in first space; or
when the image of the second user in the second image is located at the second position on the screen of the first electronic device (110, 194), the first sound signal and the second sound signal have opposite phases in second space.

2. The method according to claim 1, wherein the method of the first alternative further comprises:
when the third user speaks, intensity of the second sound signal is greater than intensity of the first sound signal.

3. The method according to claim 2, wherein
when the third user speaks, the first sound signal and the second sound signal have opposite phases in second space.

4. The method according to claim 3, wherein the first space and the second space have at least a non-overlapping part.

5. The method according to claim 1, wherein, in the first alternative, when the second user or the third user speaks, the first interface comprises a first marker (501) (501), wherein the first marker (501) indicates that the second user or the third user is speaking.

6. The method according to claim 1, wherein, in the first alternative, the first interface further comprises a speaker (170A) control, the speaker (170A) control is in an enabled state.

7. The method according to claim 1, wherein, in the second alternative, the first space and the second space have at least a non-overlapping part.

8. The method according to claim 7, wherein, in the second alternative, the first interface further comprises a camera switching control, a switching-to-voice control, a background blurring control, and a hang-up control.

9. The method according to claim 1, wherein the method of the first alternative or the second alternative further comprises: processing, by the first electronic device (110, 194), the audio signal sent by the second electronic device or the third electronic device to generate a first external audio signal and a second external audio signal, wherein
the first external audio signal is processed and then transmitted to the first sound emitting unit (170A, 201, 301), to drive the first sound emitting unit (170A, 201, 301) to output the first sound signal; and
the second external audio signal is processed and then transmitted to the second sound emitting unit (202, 203, 302, 303, 304), to drive the second sound emitting unit (202, 203, 302, 303, 304) to output the second sound signal.

10. The method according to claim 9, wherein the processing, by the first electronic device (110, 194), the audio signal sent by the second electronic device or the third electronic device to generate a first external audio signal and a second external audio signal comprises:
performing, by the first electronic device (110, 194), channel extension processing on the audio signal sent by the second electronic device or the third electronic device, to generate a first audio signal and a second audio signal;
performing, by the first electronic device (110, 194), signal parameter processing on the first audio signal, to obtain the first external audio signal; and
performing, by the first electronic device (110, 194), signal parameter processing on the second audio signal, to obtain the second external audio signal.

11. The method according to any one of claims 1 to 10, wherein, in the first alternative or second alternative, the audio signal sent by the second electronic device or the third electronic device is a single-channel audio signal.

12. The method according to claim 11, wherein during the signal parameter processing performed on the first audio signal and the second audio signal, phase adjustment processing is performed on at least one audio signal, and gain adjustment processing is performed on at least one audio signal.

13. The method according to claim 12, wherein the phase adjustment processing comprises phase inversion processing; wherein the signal parameter processing performed on the first audio signal and the second audio signal comprises signal advancing processing or signal delaying processing;
wherein when the second user emits a sound, signal strength of the first external audio signal is greater than signal strength of the second external audio signal;
wherein when the image of the second user is located at the first position on the screen of the first electronic device (110, 194), signal strength of the first external audio signal is greater than signal strength of the second external audio signal;
wherein, when the processing, by the first electronic device (110, 194), the audio signal sent by the second electronic device or the third electronic device to generate a first external audio signal and a second outloud audio signal comprises:
performing, by the first electronic device (110, 194), channel extension processing on the audio signal sent by the second electronic device or the third electronic device, to generate a first audio signal and a second audio signal;
performing, by the first electronic device (110, 194), signal parameter processing on the first audio signal, to obtain the first external audio signal, and
performing, by the first electronic device (110, 194), signal parameter processing on the second audio signal, to obtain the second external audio signal,
processing, by the first electronic device (110, 194), the audio signal sent by the second electronic device or the third electronic device to generate a first external audio signal and a second external audio signal comprises:
performing filtering processing on the audio signal sent by the second electronic device or the third electronic device; and
processing, by the first electronic device (110, 194), an audio signal sent by the second electronic device or the third electronic device to generate a first external audio signal and a second external audio signal comprises:
performing filtering processing on at least one of the first audio signal or the second audio signal.

## Patentansprüche

1. Audio-Wiedergabeverfahren, wobei das Verfahren auf eine erste elektronische Vorrichtung (110, 194) angewendet wird, die eine erste Schallabgabeeinheit (170A, 201, 301) und eine zweite Schallabgabeeinheit (202, 203, 302, 303, 304) umfasst, wobei in einer ersten Alternative das Verfahren umfasst:
Empfangen, durch die erste elektronische Vorrichtung (110, 194), eines Audiosignals, das von der zweiten elektronischen Vorrichtung oder der dritten elektronischen Vorrichtung gesendet wird;
Ausgeben, durch die erste Schallabgabeeinheit (170A, 201, 301) der ersten elektronischen Vorrichtung (110, 194), eines ersten Schallsignals, wobei das erste Schallsignal durch Verarbeiten des von der zweiten elektronischen Vorrichtung oder der dritten elektronischen Vorrichtung gesendeten Audiosignals erhalten wird; und
Ausgeben, durch die zweite Schallabgabeeinheit (202, 203, 302, 303, 304) der ersten elektronischen Vorrichtung (110, 194), eines zweiten Schallsignals, wobei das zweite Schallsignal durch Verarbeiten des von der zweiten elektronischen Vorrichtung oder der dritten elektronischen Vorrichtung gesendeten Audiosignals erhalten wird, und
wenn der zweite Benutzer spricht, eine Intensität des ersten Schallsignals größer als eine Intensität des zweiten Schallsignals ist,
und
Herstellen (S1), durch die erste elektronische Vorrichtung (110, 194), von Anrufverbindungen mit einer zweiten elektronischen Vorrichtung und einer dritten elektronischen Vorrichtung;
Anzeigen, durch die erste elektronische Vorrichtung (110, 194), einer ersten Schnittstelle, wobei die erste Schnittstelle ein erstes Bild, ein zweites Bild und ein drittes Bild umfasst, das erste Bild, das zweite Bild und das dritte Bild sich an unterschiedlichen Positionen der ersten Schnittstelle befinden, das erste Bild einem ersten Benutzer zugeordnet ist, der erste Benutzer über die erste elektronische Vorrichtung (110, 194) spricht, das zweite Bild einem zweiten Benutzer zugeordnet ist, der zweite Benutzer über die zweite elektronische Vorrichtung spricht, das dritte Bild einem dritten Benutzer zugeordnet ist, der dritte Benutzer über die dritte elektronische Vorrichtung spricht, und die erste Schallabgabeeinheit (170A, 201, 301) und die zweite Schallabgabeeinheit (202, 203, 302, 303, 304) sich in einem aktivierten Zustand befinden; und
wobei das erste Schallsignal und das zweite Schallsignal in einem ersten Raum entgegengesetzte Phasen aufweisen;
oder, in einer zweiten Alternative, das Verfahren umfasst:
Empfangen, durch die erste elektronische Vorrichtung (110, 194), eines von der zweiten elektronischen Vorrichtung gesendeten Audiosignals;
Ausgeben, durch die erste Schallabgabeeinheit (170A, 201, 301) der ersten elektronischen Vorrichtung (110, 194), eines ersten Schallsignals, wobei das erste Schallsignal durch Verarbeiten des von der zweiten elektronischen Vorrichtung gesendeten Audiosignals erhalten wird; und
Ausgeben, durch die zweite Schallabgabeeinheit (202, 203, 302, 303, 304) der ersten elektronischen Vorrichtung (110, 194), eines zweiten Schallsignals, wobei das zweite Schallsignal durch Verarbeiten des von der zweiten elektronischen Vorrichtung gesendeten Audiosignals erhalten wird, und
wenn sich das Bild des zweiten Benutzers in dem zweiten Bild an einer ersten Position auf dem Bildschirm der ersten elektronischen Vorrichtung (110, 194) befindet, eine Intensität des ersten Schallsignals größer als eine Intensität des zweiten Schallsignals ist, oder
wenn sich das Bild des zweiten Benutzers in dem zweiten Bild an einer zweiten Position auf dem Bildschirm der ersten elektronischen Vorrichtung (110, 194) befindet, eine Intensität des zweiten Schallsignals größer als eine Intensität des ersten Schallsignals ist,
Anzeigen, durch die erste elektronische Vorrichtung (110, 194), einer ersten Schnittstelle, nachdem die erste elektronische Vorrichtung (110, 194) eine Anrufverbindung mit einer zweiten elektronischen Vorrichtung hergestellt hat, wobei die erste Schnittstelle ein erstes Bild und ein zweites Bild umfasst, das erste Bild einem ersten Benutzer zugeordnet ist, der erste Benutzer über die erste elektronische Vorrichtung (110, 194) spricht, das zweite Bild einem zweiten Benutzer zugeordnet ist, der zweite Benutzer über die zweite elektronische Vorrichtung spricht, das zweite Bild ein dynamisches Bild ist, das zweite Bild einen Bildschirm der ersten elektronischen Vorrichtung (110, 194) bedeckt, das zweite Bild ein Bild des zweiten Benutzers umfasst, und die erste Schallabgabeeinheit (170A, 201, 301) und die zweite Schallabgabeeinheit (202, 203, 302, 303, 304) sich in einem aktivierten Zustand befinden,
**dadurch gekennzeichnet, dass** wenn sich das Bild des zweiten Benutzers in dem zweiten Bild an der ersten Position auf dem Bildschirm der ersten elektronischen Vorrichtung (110, 194) befindet, das erste Schallsignal und das zweite Schallsignal im ersten Raum entgegengesetzte Phasen aufweisen; oder
wenn sich das Bild des zweiten Benutzers in dem zweiten Bild an der zweiten Position auf dem Bildschirm der ersten elektronischen Vorrichtung (110, 194) befindet, das erste Schallsignal und das zweite Schallsignal in einem zweiten Raum entgegengesetzte Phasen aufweisen.

2. Verfahren nach Anspruch 1, wobei das Verfahren der ersten Alternative ferner umfasst:
wenn der dritte Benutzer spricht, eine Intensität des zweiten Schallsignals größer als eine Intensität des ersten Schallsignals ist.

3. Verfahren nach Anspruch 2, wobei
wenn der dritte Benutzer spricht, das erste Schallsignal und das zweite Schallsignal im zweiten Raum entgegengesetzte Phasen aufweisen.

4. Verfahren nach Anspruch 3, wobei der erste Raum und der zweite Raum mindestens einen nicht überlappenden Teil aufweisen.

5. Verfahren nach Anspruch 1, wobei in der ersten Alternative, wenn der zweite Benutzer oder der dritte Benutzer spricht, die erste Schnittstelle eine erste Markierung (501) umfasst, wobei die erste Markierung (501) anzeigt, dass der zweite Benutzer oder der dritte Benutzer spricht.

6. Verfahren nach Anspruch 1, wobei in der ersten Alternative die erste Schnittstelle ferner ein Lautsprecher-(170A)-Bedienelement umfasst, wobei sich das Lautsprecher-(170A)-Bedienelement in einem aktivierten Zustand befindet.

7. Verfahren nach Anspruch 1, wobei in der zweiten Alternative der erste Raum und der zweite Raum mindestens einen nicht überlappenden Teil aufweisen.

8. Verfahren nach Anspruch 7, wobei in der zweiten Alternative die erste Schnittstelle ferner ein Kamera-Umschaltbedienelement, ein Umschalten-auf-Sprache-Bedienelement, ein Hintergrundunschärfe-Bedienelement und ein Auflegen-Bedienelement umfasst.

9. Verfahren nach Anspruch 1, wobei das Verfahren der ersten Alternative oder der zweiten Alternative ferner umfasst: Verarbeiten, durch die erste elektronische Vorrichtung (110, 194), des von der zweiten elektronischen Vorrichtung oder der dritten elektronischen Vorrichtung gesendeten Audiosignals, um ein erstes externes Audiosignal und ein zweites externes Audiosignal zu erzeugen, wobei
das erste externe Audiosignal verarbeitet und dann an die erste Schallabgabeeinheit (170A, 201, 301) übertragen wird, um die erste Schallabgabeeinheit (170A, 201, 301) anzutreiben, das erste Schallsignal auszugeben; und
das zweite externe Audiosignal verarbeitet und dann an die zweite Schallabgabeeinheit (202, 203, 302, 303, 304) übertragen wird, um die zweite Schallabgabeeinheit (202, 203, 302, 303, 304) anzutreiben, das zweite Schallsignal auszugeben.

10. Verfahren nach Anspruch 9, wobei das Verarbeiten, durch die erste elektronische Vorrichtung (110, 194), des von der zweiten elektronischen Vorrichtung oder der dritten elektronischen Vorrichtung gesendeten Audiosignals zur Erzeugung eines ersten externen Audiosignals und eines zweiten externen Audiosignals umfasst:
Durchführen, durch die erste elektronische Vorrichtung (110, 194), einer Kanalerweiterungsverarbeitung an dem von der zweiten elektronischen Vorrichtung oder der dritten elektronischen Vorrichtung gesendeten Audiosignal, um ein erstes Audiosignal und ein zweites Audiosignal zu erzeugen;
Durchführen, durch die erste elektronische Vorrichtung (110, 194), einer Signalparameterverarbeitung an dem ersten Audiosignal, um das erste externe Audiosignal zu erhalten; und
Durchführen, durch die erste elektronische Vorrichtung (110, 194), einer Signalparameterverarbeitung an dem zweiten Audiosignal, um das zweite externe Audiosignal zu erhalten.

11. Verfahren nach einem der Ansprüche 1 bis 10, wobei in der ersten Alternative oder der zweiten Alternative das von der zweiten elektronischen Vorrichtung oder der dritten elektronischen Vorrichtung gesendete Audiosignal ein Einkanal-Audiosignal ist.

12. Verfahren nach Anspruch 11, wobei während der an dem ersten Audiosignal und dem zweiten Audiosignal durchgeführten Signalparameterverarbeitung eine Phasenanpassungsverarbeitung an mindestens einem Audiosignal durchgeführt wird und eine Verstärkungsanpassungsverarbeitung an mindestens einem Audiosignal durchgeführt wird.

13. Verfahren nach Anspruch 12, wobei die Phasenanpassungsverarbeitung eine Phasenumkehrverarbeitung umfasst; wobei die an dem ersten Audiosignal und dem zweiten Audiosignal durchgeführte Signalparameterverarbeitung eine Signalvoreilungverarbeitung oder eine Signalverzögerungsverarbeitung umfasst;
wobei, wenn der zweite Benutzer einen Ton von sich gibt, eine Signalstärke des ersten externen Audiosignals größer als eine Signalstärke des zweiten externen Audiosignals ist;
wobei, wenn sich das Bild des zweiten Benutzers an der ersten Position auf dem Bildschirm der ersten elektronischen Vorrichtung (110, 194) befindet, eine Signalstärke des ersten externen Audiosignals größer als eine Signalstärke des zweiten externen Audiosignals ist;
wobei, wenn das Verarbeiten, durch die erste elektronische Vorrichtung (110, 194), des von der zweiten elektronischen Vorrichtung oder der dritten elektronischen Vorrichtung gesendeten Audiosignals zur Erzeugung eines ersten externen Audiosignals und eines zweiten Laut-Audiosignals umfasst:
Durchführen, durch die erste elektronische Vorrichtung (110, 194), einer Kanalerweiterungsverarbeitung an dem von der zweiten elektronischen Vorrichtung oder der dritten elektronischen Vorrichtung gesendeten Audiosignal, um ein erstes Audiosignal und ein zweites Audiosignal zu erzeugen;
Durchführen, durch die erste elektronische Vorrichtung (110, 194), einer Signalparameterverarbeitung an dem ersten Audiosignal, um das erste externe Audiosignal zu erhalten; und
Durchführen, durch die erste elektronische Vorrichtung (110, 194), einer Signalparameterverarbeitung an dem zweiten Audiosignal, um das zweite externe Audiosignal zu erhalten,
das Verarbeiten, durch die erste elektronische Vorrichtung (110, 194), des von der zweiten elektronischen Vorrichtung oder der dritten elektronischen Vorrichtung gesendeten Audiosignals zur Erzeugung eines ersten externen Audiosignals und eines zweiten externen Audiosignals umfasst:
Durchführen einer Filterverarbeitung an dem von der zweiten elektronischen Vorrichtung oder der dritten elektronischen Vorrichtung gesendeten Audiosignal; und
das Verarbeiten, durch die erste elektronische Vorrichtung (110, 194), eines von der zweiten elektronischen Vorrichtung oder der dritten elektronischen Vorrichtung gesendeten Audiosignals zur Erzeugung eines ersten externen Audiosignals und eines zweiten externen Audiosignals umfasst:
Durchführen einer Filterverarbeitung an mindestens einem von dem ersten Audiosignal oder dem zweiten Audiosignal.

## Revendications

1. Procédé de lecture audio, dans lequel le procédé est appliqué à un premier dispositif électronique (110, 194) comprenant une première unité d'émission sonore (170A, 201, 301) et une seconde unité d'émission sonore (202, 203, 302, 303, 304), dans lequel, dans une première variante, le procédé comprend :
la réception, par le premier dispositif électronique (110, 194), d'un signal audio envoyé par le deuxième dispositif électronique ou le troisième dispositif électronique ;
l'émission, par la première unité d'émission sonore (170A, 201, 301) du premier dispositif électronique (110, 194), d'un premier signal sonore, dans lequel le premier signal sonore est obtenu en traitant le signal audio envoyé par le deuxième dispositif électronique ou le troisième dispositif électronique ; et
l'émission, par la seconde unité d'émission sonore (202, 203, 302, 303, 304) du premier dispositif électronique (110, 194), d'un second signal sonore, dans lequel le second signal sonore est obtenu en traitant le signal audio envoyé par le deuxième dispositif électronique ou le troisième dispositif électronique, et
lorsque le deuxième utilisateur parle, une intensité du premier signal sonore est supérieure à une intensité du second signal sonore ;
et
l'établissement (S1), par le premier dispositif électronique (110, 194), de connexions d'appel avec un deuxième dispositif électronique et un troisième dispositif électronique ;
l'affichage, par le premier dispositif électronique (110, 194), d'une première interface, dans lequel la première interface comprend une première image, une deuxième image et une troisième image, la première image, la deuxième image et la troisième image sont situées à des positions différentes de la première interface, la première image est associée à un premier utilisateur, le premier utilisateur parle par l'intermédiaire du premier dispositif électronique (110, 194), la deuxième image est associée à un deuxième utilisateur, le deuxième utilisateur parle par l'intermédiaire du deuxième dispositif électronique, la troisième image est associée à un troisième utilisateur, le troisième utilisateur parle par l'intermédiaire du troisième dispositif électronique, et la première unité d'émission sonore (170A, 201, 301) et la seconde unité d'émission sonore (202, 203, 302, 303, 304) sont dans un état activé ; et
le premier signal sonore et le second signal sonore ayant des phases opposées dans un premier espace ;
ou, dans une seconde variante, le procédé comprend :
la réception, par le premier dispositif électronique (110, 194), d'un signal audio envoyé par le deuxième dispositif électronique ;
l'émission, par la première unité d'émission sonore (170A, 201, 301) du premier dispositif électronique (110, 194), d'un premier signal sonore, dans lequel le premier signal sonore est obtenu en traitant le signal audio envoyé par le deuxième dispositif électronique ; et
l'émission, par la seconde unité d'émission sonore (202, 203, 302, 303, 304) du premier dispositif électronique (110, 194), d'un second signal sonore, dans lequel le second signal sonore est obtenu en traitant le signal audio envoyé par le deuxième dispositif électronique, et
lorsque l'image du deuxième utilisateur dans la deuxième image est située à une première position sur l'écran du premier dispositif électronique (110, 194), une intensité du premier signal sonore est supérieure à une intensité du second signal sonore, ou
lorsque l'image du deuxième utilisateur dans la deuxième image est située à une seconde position sur l'écran du premier dispositif électronique (110, 194), une intensité du second signal sonore est supérieure à une intensité du premier signal sonore,
l'affichage, par le premier dispositif électronique (110, 194), d'une première interface après que le premier dispositif électronique (110, 194) a établi une connexion d'appel avec un deuxième dispositif électronique, dans lequel la première interface comprend une première image et une deuxième image, la première image est associée à un premier utilisateur, le premier utilisateur parle par l'intermédiaire du premier dispositif électronique (110, 194), la deuxième image est associée à un deuxième utilisateur, le deuxième utilisateur parle par l'intermédiaire du deuxième dispositif électronique, la deuxième image est une image dynamique, la deuxième image couvre un écran du premier dispositif électronique (110, 194), la deuxième image comprend une image du deuxième utilisateur, et la première unité d'émission sonore (170A, 201, 301) et la seconde unité d'émission sonore (202, 203, 302, 303, 304) sont dans un état activé,
**caractérisé en ce que** lorsque l'image du deuxième utilisateur dans la deuxième image est située à la première position sur l'écran du premier dispositif électronique (110, 194), le premier signal sonore et le second signal sonore ont des phases opposées dans un premier espace ; ou
lorsque l'image du deuxième utilisateur dans la deuxième image est située à la seconde position sur l'écran du premier dispositif électronique (110, 194), le premier signal sonore et le second signal sonore ont des phases opposées dans un second espace.

2. Procédé selon la revendication 1, dans lequel le procédé de la première variante comprend en outre :
lorsque le troisième utilisateur parle, une intensité du second signal sonore est supérieure à une intensité du premier signal sonore.

3. Procédé selon la revendication 2, dans lequel
lorsque le troisième utilisateur parle, le premier signal sonore et le second signal sonore ont des phases opposées dans un second espace.

4. Procédé selon la revendication 3, dans lequel le premier espace et le second espace ont au moins une partie sans chevauchement.

5. Procédé selon la revendication 1, dans lequel, dans la première variante, lorsque le deuxième utilisateur ou le troisième utilisateur parle, la première interface comprend un premier marqueur (501), dans lequel le premier marqueur (501) indique que le deuxième utilisateur ou le troisième utilisateur est en train de parler.

6. Procédé selon la revendication 1, dans lequel, dans la première variante, la première interface comprend en outre une commande de haut-parleur (170A), la commande de haut-parleur (170A) étant dans un état activé.

7. Procédé selon la revendication 1, dans lequel, dans la seconde variante, le premier espace et le second espace ont au moins une partie sans chevauchement.

8. Procédé selon la revendication 7, dans lequel, dans la seconde variante, la première interface comprend en outre une commande de commutation de caméra, une commande de basculement vers la voix, une commande de floutage d'arrière-plan et une commande de raccrochage.

9. Procédé selon la revendication 1, dans lequel le procédé de la première variante ou de la seconde variante comprend en outre : le traitement, par le premier dispositif électronique (110, 194), du signal audio envoyé par le deuxième dispositif électronique ou le troisième dispositif électronique pour générer un premier signal audio externe et un second signal audio externe, dans lequel
le premier signal audio externe est traité puis transmis à la première unité d'émission sonore (170A, 201, 301), pour exciter la première unité d'émission sonore (170A, 201, 301) afin d'émettre le premier signal sonore ; et
le second signal audio externe est traité puis transmis à la seconde unité d'émission sonore (202, 203, 302, 303, 304), pour exciter la seconde unité d'émission sonore (202, 203, 302, 303, 304) afin d'émettre le second signal sonore.

10. Procédé selon la revendication 9, dans lequel le traitement, par le premier dispositif électronique (110, 194), du signal audio envoyé par le deuxième dispositif électronique ou le troisième dispositif électronique pour générer un premier signal audio externe et un second signal audio externe comprend :
la réalisation, par le premier dispositif électronique (110, 194), d'un traitement d'extension de canal sur le signal audio envoyé par le deuxième dispositif électronique ou le troisième dispositif électronique, pour générer un premier signal audio et un second signal audio ;
la réalisation, par le premier dispositif électronique (110, 194), d'un traitement de paramètre de signal sur le premier signal audio, pour obtenir le premier signal audio externe ; et
la réalisation, par le premier dispositif électronique (110, 194), d'un traitement de paramètre de signal sur le second signal audio, pour obtenir le second signal audio externe.

11. Procédé selon l'une quelconque des revendications 1 à 10, dans lequel, dans la première variante ou la seconde variante, le signal audio envoyé par le deuxième dispositif électronique ou le troisième dispositif électronique est un signal audio monocanal.

12. Procédé selon la revendication 11, dans lequel pendant le traitement de paramètre de signal réalisé sur le premier signal audio et le second signal audio, un traitement d'ajustement de phase est réalisé sur au moins un signal audio, et un traitement d'ajustement de gain est réalisé sur au moins un signal audio.

13. Procédé selon la revendication 12, dans lequel le traitement d'ajustement de phase comprend un traitement d'inversion de phase ; dans lequel le traitement de paramètre de signal réalisé sur le premier signal audio et le second signal audio comprend un traitement d'avance de signal ou un traitement de retard de signal ;
dans lequel lorsque le deuxième utilisateur émet un son, une puissance de signal du premier signal audio externe est supérieure à une puissance de signal du second signal audio externe ;
dans lequel lorsque l'image du deuxième utilisateur est située à la première position sur l'écran du premier dispositif électronique (110, 194), une puissance de signal du premier signal audio externe est supérieure à une puissance de signal du second signal audio externe ;
dans lequel, lorsque le traitement, par le premier dispositif électronique (110, 194), du signal audio envoyé par le deuxième dispositif électronique ou le troisième dispositif électronique pour générer un premier signal audio externe et un second signal audio externe comprend :
la réalisation, par le premier dispositif électronique (110, 194), d'un traitement d'extension de canal sur le signal audio envoyé par le deuxième dispositif électronique ou le troisième dispositif électronique, pour générer un premier signal audio et un second signal audio ;
la réalisation, par le premier dispositif électronique (110, 194), d'un traitement de paramètre de signal sur le premier signal audio, pour obtenir le premier signal audio externe, et
la réalisation, par le premier dispositif électronique (110, 194), d'un traitement de paramètre de signal sur le second signal audio, pour obtenir le second signal audio externe,
le traitement, par le premier dispositif électronique (110, 194), du signal audio envoyé par le deuxième dispositif électronique ou le troisième dispositif électronique pour générer un premier signal audio externe et un second signal audio externe comprend :
la réalisation d'un traitement de filtrage sur le signal audio envoyé par le deuxième dispositif électronique ou le troisième dispositif électronique ; et
le traitement, par le premier dispositif électronique (110, 194), du signal audio envoyé par le deuxième dispositif électronique ou le troisième dispositif électronique pour générer un premier signal audio externe et un second signal audio externe comprend :
la réalisation d'un traitement de filtrage sur au moins l'un du premier signal audio ou du second signal audio.
